# EUROPEAN PATENT SPECIFICATION

(11) **EP 2 003 980 B1**
(45) Date of publication and mention of the grant of the patent: **22.08.2018**
(21) Application number: 07726764.9
(22) Date of filing: 09.03.2007
(51) Int. Cl.: A01P 7/00, A01P 7/04, A01P 5/00, A01P 9/00, A01N 25/10, A01N 25/14, A01N 47/02

(54) **PESTICIDE COMPOSITIONS FOR COMBATING ARTHROPOD PESTS, SNAILS AND NEMATODES**
PESTIZIDZUSAMMENSETZUNGEN FÜR DIE BEKÄMPFUNG VON SCHADARTHROPODEN, SCHNECKEN UND NEMATODEN
COMPOSITIONS PESTICIDES DESTINEES A LA LUTTE CONTRE LES ORGANISMES NUISIBLES ARTHROPODES, LES ESCARGOTS ET LES NEMATODES

(30) Priority: 10.03.2006 US 781004 P
(43) Date of publication of application: 24.12.2008
(73) Proprietor: BASF SE, 67056 Ludwigshafen am Rhein (DE)
(72) Inventor: TARANTA, Claude, 76297 Stutensee (DE); BORK, Thomas, 67593 Westhofen (DE); MEIER, Wolfgang, 67117 Limburgerhof (DE); WILHELM, Ronald, 65719 Hofheim (DE); BRATZ, Matthias, 67133 Maxdorf (DE); HOLMES, Keith, A., 69450 St. Cyr au Mont d'Or (FR); CAZENEUVE, Eric, 33115 Pyla Sur Mer (FR); OLOUMI-SADEGHI, Hassan, Raleigh, North Carolina 27614 (US); COFFELT, Mark, Raleigh, North Carolina 27613 (US)
(86) International application number: PCT/EP2007/052244
(87) International publication number: WO 2007/104720

(56) References cited:
- EP-A2- 0 285 404
- WO-A-89/12451
- WO-A-98/28973
- WO-A-99/00187
- DE-A1- 10 124 297
- GB-A- 2 210 884
- US-A- 4 983 390

## Description

The present invention relates to pesticide compositions in the form of a water absorbent granular material which are suitable for combating arthropod pests, snails and nematodes, in particular for combating soil living pests. The invention also relates to a method for combating such pests, which comprises applying to the soil a pesticidally effective amount of at least one pesticide composition.

Soil-living pests, including soil-living arthropod pests and nematodes, are often combated by applying an effective amount of a suitable pesticide compound to the soil. The pesticide compounds may be applied as a solid or liquid composition, in particular as a dust or granule formulation comprising an inert carrier such as clay. Such methods suffer from several disadvantages. For example, most soil-applied pesticides have potential for leaching. Therefore, care must be taken to minimize both surface and ground water contamination. Moreover, the effectiveness of the pesticide may vary depending on environmental conditions - e.g. properly timed rain is needed for the successful functioning of the chemistry in the soil, but too much rain may reduce the effectiveness and may cause leaching. A long-lasting effect against soil living pest is difficult to achieve.

Furthermore, most of the present methods for combating soil living pests, in particular the methods for combating termites, are tedious and labour intensive and therefore expensive. Standard techniques for combating termites include e.g. trenching, rodding or drilling. Trenching requires digging deep trenches around the foundation and pouring large amounts of a liquid termiticide composition into the trench, together with soil. Rodding means inserting penetrating rods into the bottom of a trench around the foundation. The rods should be inserted no more than 15-30 cm apart to achieve a close barrier around the foundation. Drilling requires piercing the foundation and applying the liquid termiticide below the foundation, e.g. by means of a soil injection nozzle.

WO 98/28973 discloses a process for protection of buildings against damage caused by insects, whereby an effective amount of an insecticidally active compound, preferably a 1-arylpyrazole compound, is spread around or under the building at discrete locations. The active compounds are applied as dilutions of conventional formulations and thus the process suffers from the aforementioned drawbacks.

WO 89/12450 describes delivery compositions for pesticides comprising one or more solid superabsorbent polymers and one or more pesticidal agents, e.g. herbicides fungicides or an insecticide. The delivery compositions usually contain large amounts of additional substances such as film-forming agents or oil in order to slow the release rate of the active ingredient. The effectiveness of these compositions are not entirely satisfactory. This document does not address the problems associated with combating soil-living arthropod pests.

DE 10124297 discloses formulations of active ingredients comprising superabsorbent polymers, which provide a reduced phytotoxicity of the active ingredient and thus are suitable for use in nutrient media for plants. The formulations are obtained by kneading the superabsorbent polymer and the active ingredient in the presence of water. The effectiveness of these formulations is not entirely satisfactory. This document does not address the problems associated with combating soil-living arthropod pests or nematodes.

DE 10157350 discloses formulations of active ingredients comprising superabsorbent polymers which are obtained by kneading the superabsorbent polymer and the active ingredient in the presence of water. The tested formulations contain fungicides. The effectiveness of these compositions is not entirely satisfactory. This document does not address the problems associated with combating soil-living arthropod pests.

WO 01/10212 discloses compositions containing an active ingredient and a water-in-oil polymer dispersion, wherein the oil phase contains water-swellable polymers. This document does not address the problems associated with combating soil-living arthropod pests.

GB 2210884 discloses granules based on hydrophilic polymers. The granules are prepared by adding an aqueous emulsion containing one or more active principles to hydrophilic polymer granules and then drying the mixture, so as to obtain the granules sought. The granules are of use in, for example, insecticidal, acaricidal and nematocidal treatments.

US 4983390 discloses terrestrial delivery compositions and methods for controlling insect and habitant-associated pest populations in terrestrial environments. Superabsorbent solid organic polymers such as acrylamide and acrylate polymers, copolymers and ter-polymers, optionally crafted, which absorb over 100 times their weight in water are used in natural or artificial, terrestrial environment insect or pest population control compositions.

WO 89/12451 A discloses flowable insecticidal delivery compositions and methods for controlling insect populations in an aqueous environment. The compositions comprise a superabsorbent solid organic polymer which absorbs over 100 times its weight in water, at least one different insecticide agent and water or oil. Methods for using the superabsorbent polymer insecticidal delivery agent for the control of aquatic environment insect populations, including mosquito population control methods, in an area needing aquatic environment insect population control treatment or in a dry area that is exposed to need aquatic environment insect populations control, are described.

EP 0285404 A2 discloses an insecticidal delivery composition for controlling a population of aquatic environment insects in preflood or flood conditions. The delivery compositions comprise at least one superabsorbent solid organic polymer selected from hydrophilic acrylamide and acrylate polymers which absorb over 100 times their weight in water, and at least one different insecticidal agent, said polymer and agent being present in a total amount effective to control the population of aquatic environment insects. Further disclosed is a method for controlling a population of aquatic environment insects.

WO 99/00187 A discloses a porous crosslinked hydrophilic polymeric material having cavities joined by interconnecting pores wherein at least some of the cavities at the interior of the material communicate with the surface of the material. It further discloses a process for producing the polymeric material.

Therefore, it is an object of the present invention to provide compositions which are suitable for combating soil-living pests and which overcome the problems associated with the known techniques. In particular the compositions should be applicable easily and provide a long-lasting action on soil-living pests. Moreover, environmental conditions should not have an adverse effect on the effectiveness of the pesticide.

It has now been found that the problems associated with combating soil-living pests by pesticide treatment of the soil can be overcome by a pesticide composition in the form of a water absorbent granular material as described herein.

Accordingly, the present invention relates to pesticide compositions in the form of a water absorbent granular material as described herein and to the use of such compositions for combating arthropod pests, in particular soil-living arthropod pests, snails and nematodes, with particular preference given to soil-living insect pests.

The pesticide compositions according to the invention are a water absorbent granular material, which contains:
i) from 0.001 to 10% by weight of at least one organic pesticide compound, in particular a pesticide compound that is active against said soil-living arthropod pest,
ii) from 80 to 99.999% by weight of at least one granular super absorbent polymer, and
iii) water,
wherein the % by weight are based on the total weight of the composition, except for water and wherein the components i) and ii) make up at least 90% by weight of the composition except for water, and wherein the water absorbent granular material is obtainable by a process which comprises the fluidized bed spray coating of superabsorbent polymer granules with a liquid aqueous composition containing the at least one pesticide compound,
wherein the superabsorbent polymer is a crosslinked copolymer of ethylenically unsaturated monomers M, wherein the monomers M comprising at least 90% by weight, based of the total weight of monomers M, of
a mixture of at least one monoethylenically unsaturated carboxylic acid CA or a salt thereof and at least one amide of a monoethylenically unsaturated acid AM, or of a mixture of at least one monoethylenically unsaturated carboxylic acid CA and at least one alkali metal salt of a monoethylenically unsaturated carboxylic acid CA.

The invention also relates to a method for combating pests, selected from arthropod pests and nematodes, which comprises contacting said pests, their habitat, breeding ground, food supply, plant, seed, soil, area, material or environment in which the pests are growing or may grow, or the materials, plants, seeds, soils, surfaces or spaces to be protected from an attack of or infestation by said pest, with a pesticidally effective amount of at least one pesticide composition as defined herein.

The invention in particular relates to a method for combating soil-living arthropod pests, and nematode pests, which comprises applying to the soil a pesticidally effective amount of at least one pesticide composition as defined herein.

The term "soil-living" means that the habitat, breeding ground, area or environment in which a pest or parasite is growing or may grow is the soil.

The term "organic pesticide compound" means an organic compound that is suitable for combating animal pests, in particular arthropod pests, snails and nematode pests.

The term "granular material" means that the composition has the form of granule particles. The granule particles contain the at least pesticide compound.

The method of the present invention provides several advantages over conventional methods of combating pests, in particular soil-living arthropod pests and nematodes. In particular they are less tedious than conventional methods and less amount of pesticide compound is necessary to provide effective control of the pests. Moreover the
compositions provide a long lasting action on soil-living pests and nematodes and environmental conditions have less effect on the effectiveness of the pesticide. The risk of leaching of the pesticide is minimal and thus the risk of environmental contamination, in particular surface and ground water contamination, is minimized by the compositions as defined herein.

The granular pesticide compositions according to the invention preferably contain from 85 to 99.998% by weight, in particular from 90 to 99.995% by weight, based on the total weight of the composition except for water, of at least one granular superabsorbent polymer.

Superabsorbent polymers are well-known synthetic particulate organic polymers which are solid and hydrophilic, which are insoluble in water and which are capable of absorbing a multiple of their weight of water or aqueous solutions, thereby forming a water containing polymer gel, but which on drying again form particles. Superabsorbent polymers according to the present invention are generally capable of absorbing at least 100 parts by weight of water per one part by weight of superabsorbent polymer (deionised water at 25°C, pH 7.5, 1 bar). The amount of water or aqueous solution a superabsorbent polymer is capable of absorbing, is also termed as absorption capacity or maximal absorption. For purposes of the invention, superabsorbent polymers are preferred which have an absorption capacity for deionised water (pH 7.5, 25°C, 1 bar) of at least 150 g/g, e.g. 150 to 500 g/g, in particular 200 to 500 g/g, more preferably 300 to 500 g/g of superabsorbent polymers. For purposes of the invention, superabsorbent polymers are preferred which have an absorption capacity for a 0.1% by weight aqueous solution of sodium chloride of at least 100 g/g, in particular 100 to 300 g/g of superabsorbent polymer (pH 7.5, 25°C, 1 bar). The maximal absorption or absorption capacity can be determined by routine methods known e.g. from F. L. Buchholz et al. "Modern Superabsorbent Polymer Technology", Wiley-VCH 1998, p. 153 (absorbent capacity method) or EP 993 337, example 6.

Preferred superabsorbent polymer granules are those which have a moderate swelling rate, i.e. superabsorbents, wherein the time required to achieve 60% of the maximal absorption is at least 10 minutes, in particular from 10 to 100 minutes. These values can be determined according to standard methods as described in F. L. Buchholz et al., loc. cit., p. 154 (swelling kinetics methods).

The superabsorbent polymers may be nonionic or ionic crosslinked polymers. For the purpose of the invention, the superabsorbent polymer is preferably selected from crosslinked anionic superabsorbent polymers, in particular from covalently crosslinked anionic superabsorbent polymers. A survey of suitable superabsorbent polymers is e.g. given in F. L. Buchholz et al., loc. cit., p. 11-14.

Crosslinked anionic superabsorbent polymers are crosslinked polymers which comprise anionic functional groups or acidic groups, which can be neutralized in water, e.g. sulfonic acid groups (SO₃H or SO₃⁻), phosphonate groups (PO₃H₂ or PO₃²⁻) or carboxylate groups (CO₂H or CO₂⁻). These polymers are in principle obtainable by a process which comprises copolymerizing a monoethylenically unsaturated acidic monomer and a crosslinking monomer optionally in the presence of a grafting base and optionally in the presence of one or more further neutral monoethylenically unsaturated monomers. In preferred superabsorbent polymers the carboxylate groups make up at least 80 mol-%, in particular at least 95 mol-%, of the acidic groups.

Suitable acidic monomers include monoethylenically unsaturated mono- and dicarboxylic acids having preferably from 3 to 8 carbon atoms such as acrylic acid, methacrylic acid, ethacrylic acid, α-chloroacrylic acid, crotonic acid, maleic acid, maleic anhydride, itaconic acid, citraconic acid, mesaconic acid, glutaconic acid, aconitic acid and fumaric acid; monoesters of monoethylenically unsaturated dicarboxylic acids having from 4 to 10 and preferably from 4 to 6 carbon atoms, for example monoesters of maleic acid such as monomethyl maleate; monoethylenically unsaturated sulfonic acids and phosphonic acids, for example vinylsulfonic acid, allylsulfonic acid, sulfoethyl acrylate, sulfoethyl methacrylate, sulfopropyl acrylate, sulfopropyl methacrylate, 2-hydroxy-3-acryloyloxypropylsulfonic acid, 2-hydroxy-3-methacryloyloxypropylsulfonic acid, styrenesulfonic acid, 2-acrylamido-2-methylpropanesulfonic acid, vinylphosphonic acid and allylphosphonic acid and the salts, especially the sodium, potassium and ammonium salts, of these acids. The acidic monomers usually make up at least 15 %, by weight, preferably at least 20 % by weight, of the superabsorbent polymer, e.g. 15 to 99.9 % by weight, in particular from 20 to 99.8 % by weight, based on the acidic form of the anionic superabsorbent polymer.

According to the invention, the superabsorbent polymer is a crosslinked copolymer, wherein the polymerized acidic monomers comprise at least one monoethylenically unsaturated carboxylic acid CA or a salt thereof. Preferably the monoethylenically unsaturated carboxylic acid CA or the salt thereof accounts for at least 80 mol-%, in particular at least 95 mol-% of the total amount of polymerized acidic monomeres.

Useful crosslinking monomers include compounds having at least two, for example 2, 3, 4 or 5, ethylenically unsaturated double bonds in the molecule. These compounds are also referred to as crosslinker monomers. Examples of crosslinker monomers are N,N'-methylenebisacrylamide, polyethylene glycol diacrylates and polyethylene glycol dimethacrylates, each derived from polyethylene glycols having a molecular weight from 106 to 8500 and preferably from 400 to 2000, trimethylolpropane triacrylate, trimethylol propane trimethacrylate, ethylene glycol diacrylate, ethylene glycol dimethacrylate, propylene glycol diacrylate, propylene glycol dimethacrylate, butanediol diacrylate, butanediol dimethacrylate, hexanediol diacrylate, hexanediol dimethacrylate, diethylene glycol diacrylate, diethylene glycol dimethacrylate, triethylene glycol diacrylate, triethylene glycol dimethacrylate, dipropylene glycol diacrylate, dipropylene glycol dimethacrylate, tripropylene glycol diacrylate, tripropylene glycol dimethacrylate, allyl methacrylate, diacrylates and dimethacrylates of block copolymers of ethylene oxide and propylene oxide, di-, tri-, tetra- or pentaacrylated or -methacrylated polyhydric alcohols, such as glycerol, trimethylolpropane, pentaerythritol or dipentaerythritol, esters of monoethylenically unsaturated carboxylic acids with ethylenically unsaturated alcohols such as allyl alcohol, cyclohexenol and dicyclopentenyl alcohol, e.g. allyl acrylate and allyl methacrylate, also triallylamine, dialkyldiallylammonium halides such as dimethyldiallylammonium chloride and diethyldiallylammonium chloride, tetraallylethylenediamine, divinylbenzene, diallyl phthalate, polyethylene glycol divinyl ethers of polyethylene glycols having a molecular weight from 106 to 4000, trimethylolpropane diallyl ether, butanediol divinyl ether, pentaerythritol triallyl ether, reaction products of 1 mol of ethylene glycol diglycidyl ether or polyethylene glycol diglycidyl ether with 2 mol of pentaerythritol triallyl ether or allyl alcohol, and divinylethyleneurea. The amount of crosslinker monomer is generally in the range from 0.05 to 20% by weight, preferably in the range from 0.1 to 10% by weight and especially in the range from 0.2 to 5% by weight, based on the weight of the superabsorbent polymer in the acidic form.

Suitable grafting bases can be of natural or synthetic origin. They include oligo- and polysaccharides such as starches, i.e. native starches from the group consisting of corn (maize) starch, potato starch, wheat starch, rice starch, tapioca starch, sorghum starch, manioca starch, pea starch or mixtures thereof, modified starches, starch degradation products, for example oxidatively, enzymatically or hydrolytically degraded starches, dextrins, for example roast dextrins, and also lower oligo- and polysaccharides, for example cyclodextrins having from 4 to 8 ring members. Useful oligo- and polysaccharides further include cellulose and also starch and cellulose derivatives. It is also possible to use polyvinyl alcohols, homo- and copolymers of N-vinylpyrrolidone, polyamines, polyamides, hydrophilic polyesters or polyalkylene oxides, especially polyethylene oxide and polypropylene oxide as a grafting base. The amount of grafting base may be up to 50 % by weight of the weight of the superabsorbent polymer in the acidic form, e.g. from 1 to 50 % by weight.

The monomers forming the superabsorbent polymer may also contain neutral monoethylenically unsaturated monomers which do not have a polymerizable group or an acidic group. Examples are monoethylenically unsaturated hydrophilic monomers, i.e. monomers having a water solubility of at least 80 g/l at 25°C 1 bar, including hydroxyalkyl esters of monoethylenically unsaturated monocarboxylic acids, e.g. the hydroxyalkyl acrylates and methacrylates, such as hydroxyethylacrylate and hydroxyethylmethacrylate, amides of monoethylenically unsaturated monocarboxylic acids such as acrylamide and methacrylamide, monomers having a polyether group, such as vinyl, allyl and methallyl ethers of polyethylene glycols and esters of monoethylenically unsaturated monocarboxylic acids and polyethers, such as polyethylenglykol acrylate and polyethyleneglycol methacrylate. In a preferred embodiment of the invention the neutral monomers make up from 10 to 84.9 % by weight, in particular from 20 to 79.9 % by weight of the superabsorbent polymer in the acidic form.

Preferred anionic superabsorbent polymers have a moderate charge density, i.e. the amount of acidic groups in the superabsorbent polymer is preferably from 0.1 to 1.1 mol per 100 g of superabsorbent polymer, in particular form 0.2 to 1 mol per 100 g of superabsorbent polymer, based on the weight of the superabsorbent polymer in the acidic form.

In a very preferred embodiment of the invention, the water absorbent polymer is a crosslinked copolymer or graft copolymer of ethylenically unsaturated monomers M which comprise at least one monoethylenically unsaturated carboxylic acid CA or a salt thereof at least one amide of a monoethylenically unsaturated acid (monomer AM), and a crosslinking monomer in polymerized form.

Suitable monoethylenically unsaturated carboxylic acids CA comprise monoethylenically unsaturated mono-carboxylic acids having 3 to 8 carbon atoms, such as acrylic acid and methacrylic acid, and monoethylenically unsaturated dicarboxylic acids having from 4 to 8 carbon atoms, such as maleic acid, fumaric acid, itaconic acid and citraconic acid. Suitable salts of monoethylenically unsaturated carboxylic acids CA comprise the alkali metal salts and the ammonium salts, in particular the potassium or sodium salts. Preferred monoethylenically unsaturated carboxylic acids CA include mono-carboxylic acids having 3 to 8 carbon atoms, in particular acrylic acid and methacrylic acid and the salts thereof, in particular the alkalimetal salts thereof, and more preferably the alkali metal salts of acrylic acid, especially the sodium salt and the potassium salt of acrylic acid.

Suitable amides of monoethylenically unsaturated acids are the amides of monoethylenically unsaturated mono-carboxylic acids having 3 to 8 carbon atoms, in particular acrylamide and methacrylamide.

In this embodiment, the water absorbent polymer is preferably a covalently crosslinked copolymer, i.e. it contains a crosslinking monomer as defined above.

Preferably, the carboxylic acid CA and the amide AM make up at least 80% by weight, e.g. from 80 to 99.95% by weight, and more preferably at least 90% by weight, e.g. from 90 to 99.9% by weight, of the ethylenically unsaturated monomers M forming the superabsorbent polymer. In this embodiment the crosslinking monomer will generally make up from 0.05 to 20% by weight, in particular from 0.1 to 10% by weight of the monomers M.

In a particular preferred embodiment, the monomers M comprise at least 90% by weight, e.g. from 90 to 99.9% by weight, based on the total weight of monomers M, of a mixture of acrylic acid or a salt thereof, in particular an alkali metal salt thereof, more preferably the potassium salt of acrylic acid, and acrylamide.

In particular, the superabsorbent polymer comprises in polymerized form:
- 15 to 89.9 %, in particular 20 to 79.8 % by weight of at least one carboxylic acid CA or a salt thereof, preferably acrylic acid or a salt thereof, in particular an alkalimetal salt thereof, more preferably the potassium salt of acrylic acid (calculated in the acidic form),
- 10 to 84.9 % in particular 20 to 79.8 % by weight of at least one amide AM, preferably an amide of a monoethylenically unsaturated mono-carboxylic acid having 3 to 8 carbon atoms, in particular acrylamide; and
- 0.1 to 10 %, in particular 0.2 to 5 % by weight of at least one crosslinker monomer,
wherein the % by weight are based on the superabsorbent polymer in the acidic form, the amount of monomers AM and CA making up at least 90 %, e.g. 90 to 99.9 % of the monomers forming the superabsorbent polymer.

Suitable superabsorbent polymers of this type are known in the art, e.g. from US 4,417,992, US 3,669,103 and WO 01/25493. They are also commercially available, e.g. from SNF SA., France, under the trademark Aquasorb®, e.g. Aquasorb® 3005 KL, 3005 KM, 3005 L and 3005 M.

In another very preferred embodiment of the invention, the water absorbent polymer is a crosslinked copolymer or graft copolymer of ethylenically unsaturated monomers M which comprise at least 80 % by weight, e.g. from 80 to 99.95% by weight, preferably at least 90 % by weight, e.g. from 90 to 99.9% by weight, based on the total amount of monomers M, of a mixture of at least one monoethylenically unsaturated carboxylic acid CA, preferably acrylic and at least one alkali metal salt of a monoethylenically unsaturated carboxylic acid CA, preferably a potassium salt or sodium salt thereof, more preferably the potassium salt or sodium salt of acrylic acid. In this embodiment, the water absorbent polymer is preferably a covalently crosslinked copolymer. In this embodiment the crosslinking monomer will generally make up from 0.05 to 20% by weight, in particular from 0.1 to 10% by weight of the monomers M.

In particular, the superabsorbent polymer of this embodiment comprises in polymerized form:
- 15 to 89.9 %, in particular 20 to 79.8 % by weight of at least one carboxylic acid CA, preferably acrylic acid;
- 10 to 84.9 % in particular 20 to 79.8 % by weight of at least one or a salt thereof, in particular an alkalimetal salt thereof, more preferably the potassium salt of acrylic acid (calculated in the acidic form); and
- 0.1 to 10 %, in particular 0.2 to 5 % by weight of at least one crosslinker monomer,
wherein the % by weight are based on the superabsorbent polymer in the acidic form, the amount of carboxylic acid CA and the salt of CA making up at least 90 %, e.g. 90 to 99.9 % of the monomers forming the superabsorbent polymer.

Suitable superabsorbent polymers of this type are commercially available, e.g. from BASF AG under the trade names Luquasorb®, e.g. Luquasorb® 1280, Luquasorb® 1060, Luquasorb® 1160, Luquasorb® 1061 and HySorb®.

Preferably, the average particle size of the superabsorbent polymer granules ranges from 0.1 to 5 mm, preferably from 0.2 to 5 mm, in particular from 0.5 to 4 mm. The average particle size is the weight average of the diameter which may be determined by microscopy or by sieving analysis.

In a preferred embodiment of the invention the superabsorbent polymer granules, which are used for preparing the pesticide composition are surface crosslinked (see F.L. Buchholz, loc. cit. pp. 97 to 103, and the literature cited therein). In the surface crosslinked polymer granules some of the functional group in the surface region of the superabsorbent polymer granules have been crosslinked by reaction with polyfunctional compounds. Surface crosslinking can be a covalent or ionic crosslinking.

Apart from surface crosslinking, the surface of superabsorbent polymer granules, which are used for preparing the pesticide composition, may have been treated with additives to reduce their dustiness and/or to ease their flow, including treatment with anti-caking additives such as particulate silica, in particular fumed silica, optionally in combination with polyols, or quaternary surfactants.

The water absorbent composition also comprises at least one organic pesticide compound, which is active against arthropod pest and/or nematodes. Generally, the pesticide compound is a non-polymeric organic compound having a molecular weight ranging from 150 to 1000 Dalton. Suitable pesticide compounds may be solid or liquid at room temperature. Usually they are not volatile at room temperature, i.e. they have a vapour pressure of not more than 1 mbar at 298 K, in particular not more than 0.1 mbar.

In a preferred embodiment of the invention, the pesticide compound is selected from a compound that is active against said soil-living arthropod pest. A skilled person is familiar with such compounds and knows which compounds are active against a specific target organism.

Suitable pesticides compounds which can be used in the compositions of the present invention include but are not limited to:
A.1. Organo(thio)phosphates: acephate, azamethiphos, azinphos-ethyl, azinphos-methyl, chlorethoxyfos, chlorfenvinphos, chlormephos, chlorpyrifos, chlorpyrifos-methyl, coumaphos, cyanophos, demeton-S-methyl, diazinon, dichlorvos/ DDVP, dicrotophos, dimethoate, dimethylvinphos, disulfoton, EPN, ethion, ethoprophos, famphur, fenamiphos, fenitrothion, fenthion, flupyrazophos, fosthiazate, heptenophos, isoxathion, malathion, mecarbam, methamidophos, methidathion, mevinphos, monocrotophos, naled, omethoate, oxydemeton-methyl, parathion, parathion-methyl, phenthoate, phorate, phosalone, phosmet, phosphamidon, phoxim, pirimiphos-methyl, profenofos, propetamphos, prothiofos, pyraclofos, pyridaphenthion, quinalphos, sulfotep, tebupirimfos, temephos, terbufos, tetrachlorvinphos, thiometon, triazophos, trichlorfon, vamidothion;
A.2. Carbamates: aldicarb, alanycarb, bendiocarb, benfuracarb, butocarboxim, butoxycarboxim, carbaryl, carbofuran, carbosulfan, ethiofencarb, fenobucarb, formetanate, furathiocarb, isoprocarb, methiocarb, methomyl, metolcarb, oxamyl, pirimicarb, propoxur, thiodicarb, thiofanox, trimethacarb, XMC, xylylcarb, triazamate;
A.3. Pyrethroids: acrinathrin, allethrin, d-cis-trans allethrin, d-trans allethrin, bifenthrin, bioallethrin, bioallethrin S-cylclopentenyl, bioresmethrin, cycloprothrin, cyfluthrin, beta-, yfluthrin, cyhalothrin, lambda-cyhalothrin, gamma-cyhalothrin, cypermethrin, alpha-cypermethrin, beta-cypermethrin, theta-cypermethrin, zeta-cypermethrin, cyphenothrin, deltamethrin, empenthrin, esfenvalerate, etofenprox, fenpropathrin, fenvalerate, flucythrinate, flumethrin, tau-fluvalinate, halfenprox, imiprothrin, permethrin, phenothrin, prallethrin, resmethrin, RU 15525, silafluofen, tefluthrin, tetramethrin, tralomethrin, transfluthrin, ZXI 8901;
A.4. Growth regulators: a) chitin synthesis inhibitors: e.g. benzoylureas: chlorfluazuron, diflubenzuron, flucycloxuron, flufenoxuron, hexaflumuron, lufenuron, novaluron, teflubenzuron, triflumuron; buprofezin, diofenolan, hexythiazox, etoxazole, clofentazine; b) ecdysone antagonists: e.g. halofenozide, methoxyfenozide, tebufenozide, azadirachtin; c) juvenoids: e.g. pyriproxyfen, methoprene, fenoxycarb, hydroprene, kinoprene; d) lipid biosynthesis inhibitors: e.g. spirodiclofen, spiromesifen or spirotetramat;
A.5. Nicotinic receptor agonists/antagonists compounds (nicotinoid insecticides or neonicotinoids): e.g. bensultap, cartap hydrochloride, clothianidin, dinotefuran, imidacloprid, thiamethoxam, nitenpyram, spinosad, acetamiprid, thiacloprid, thiocyclam, thiosultap sodium, and AKD 1022;
A.6. GABA antagonist compounds: e.g. acetoprole, chlordane, gamma-HCH, endosulfan, ethiprole, fipronil, vaniliprole, pyrafluprole, pyriprole, or the phenylpyrazole compound of formula P2 (5-amino-3-(aminothiocarbonyl)-1-(2,6-dichloro-4-trifluoromethylphenyl)-4-(trifluoromethylsulfinyl)-pyrazole); 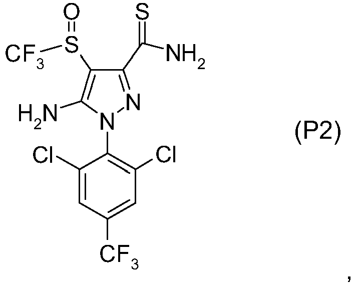
A.7. Macrocyclic lactone insecticides (chloride channel activators): abamectin, emamectin, emamectine benzoate, milbemectin, lepimectin, spinosad; 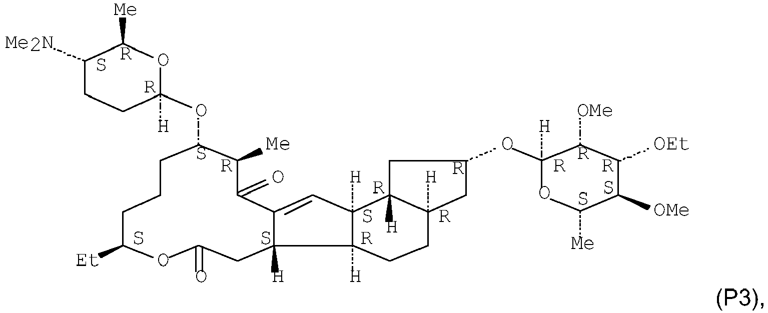
A.8. Mitochondrial complex I electron transport inhibitors (METI I compounds): e.g. fenazaquin, enpyroximate, pyrimidifen, pyridaben, tebufenpyrad, tolfenpyrad, flufenerim, rotenone;
A.9. Mitochondrial complex II and/or complex III electron transport inhibitors (METI II and III compounds): e.g. acequinocyl, fluacyprim, hydramethylnon;
A.10. Uncoupler compounds: e.g. chlorfenapyr or DNOC;
A.11. Oxidative phosphorylation inhibitor compounds: azocyclotin, cyhexatin, diafenthiuron, fenbutatin oxide, propargite, tetradifon;
A.12. Moulting disruptor compounds: e.g. cyromazine, chromafenozide, halogenozide, methoxyfenozide, tebutenozide;
A.13. Mixed function oxidase inhibitor compounds: e.g. piperonyl butoxide, tribufos;
A.14. Sodium channel blocker compounds: e.g. indoxacarb, metaflumizone,
A.15. Selective feeding blockers: crylotie, pymetrozine, flonicamid;
A.16. Mite growth inhibitors: clofentezine, hexythiazox, etoxazole;
A.17. Chitin synthesis inhibitors: buprofezin, bistrifluron, chlorfluazuron, diflubenzuron, flucycloxuron, flufenoxuron, hexaflumuron, lufenuron, novaluron, noviflumuron, teflubenzuron, triflumuron;
A.18. Lipid biosynthesis inhibitors: spirodiclofen, spiromesifen, spirotetramat;
A.19. octapaminergic agonsits: amitraz;
A.20. ryanodine receptor modulators: flubendiamide;
A.21. Various: aluminium phosphide, amidoflumet, benclothiaz, benzoximate, bifenazate, borax, bromopropylate, cyanide, cyenopyrafen, cyflumetofen, chinomethionate, dicofol, fluoroacetate, phosphine, pyridalyl, pyrifluquinazon, sulfur, tartar emetic;
A.22. Compounds of the formula P5: 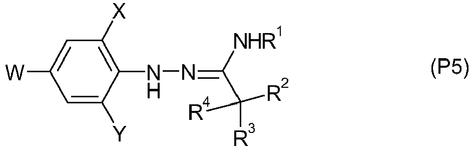
   wherein X and Y are each independently halogen, in particular chlorine;
   W is halogen or C₁-C₂-haloalkyl, in particular trifluoromethyl;
   R¹ is C₁-C₆-alkyl, C₂-C₆-alkenyl, C₂-C₆-alkynyl, C₁-C₄-alkoxy-C₁-C₄-alkyl or C₃-C₆-cycloalkyl each of which may be substituted with 1, 2, 3, 4 or 5 halogen atoms; in particular R¹ is methyl or ethyl;
   R² and R³ are C₁-C₆-alkyl, in particular methyl, or may form together with the adjacent carbon atom a C₃-C₆-cycloalkyl moiety, in particular a cyclopropyl moiety, which may carry 1, 2 or 3 halogen atoms, examples including 2,2-dichlorocyclopropyl and 2,2-dibromocyclopropyl; and
   R⁴ is hydrogen or C₁-C₆-alkyl, in particular hydrogen methyl or ethyl; and
A.23. Anthranilamide compounds of formula P6 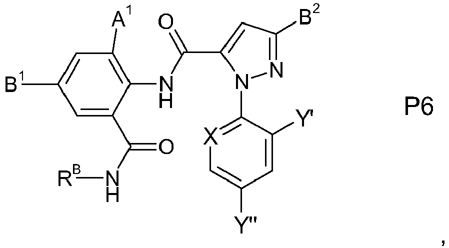 wherein A¹ is CH₃, Cl, Br, I, X is C-H, C-CI, C-F or N, Y' is F, CI, or Br, Y" is H, F, CI, CF₃, B¹ is hydrogen, CI, Br, I, CN, B² is CI, Br, CF₃, OCH₂CF₃, OCF₂H, and R^{B} is hydrogen, CH₃ or CH(CH₃)₂, in particular a compound, wherein A¹ is CH₃, B¹ is CN, R^{B} is CH₃, B² is Br, X is N, Y' is CI and Y" is H;
A.24. Malononitrile compounds: CF₃(CH₂)₂C(CN)₂CH₂(CF₂)₃CF₂H, CF₃(CH₂)₂C(CN)₂CH₂(CF₂)₅CF₂H, CF₃(CH₂)₂C(CN)₂(CH₂)₂C(CF₃)₂F, CF₃(CH₂)₂C(CN)₂(CH₂)₂(CF₂)₃CF₃, CF₂H(CF₂)₃CH₂C(CN)₂CH₂(CF₂)₃CF₂H, CF₃(CH₂)₂C(CN)₂CH₂(CF₂)₃CF₃, CF₃(CF₂)₂CH₂C(CN)₂CH₂(CF₂)₃CF₂H, CF₃CF₂CH₂C(CN)₂CH₂(CF₂)₃CF₂H, 2-(2,2,3,3,4,4,5,5-octafluoropentyl)-2-(3,3,4,4,4-pentafluorobutyl)-malonodinitrile, and CF₂HCF₂CF₂CF₂CH₂C(CN)₂CH₂CH₂CF₂CF₃; Suitable pesticide compounds also include microorganisms (microbial disruptors), such as *Bacillus thuringiensis subsp. Israelensi, subsp. Aizawai, subsp. Kurstaki, subsp. Tenebrionis, Bacillus sphaericus* and *Bacillus subtilis.*

Suitable pesticide compounds are described in "The Pesticide Manual", 13th Edition, British Crop Protection Council (2003) among other publications.
Thiamides of formula P2 and their preparation have been described in WO 98/28279. Lepimection is known from Agro Project, PJB Publications Ltd, November 2004. Benclothiaz and its preparation have been described in EP-A 454621. Methidathion and Paraoxon and their preparation have been described in Farm Chemicals Handbook, Volume 88, Meister Publishing Company, 2001. Acetoprole and its preparation have been described in WO 98/28277. Metaflumizone and its preparation have been described in EP-A 462 456. Flupyrazofos has been described in Pesticide Science 54, 1988, p.237-243 and in US 4822779. Pyrafluprole and its preparation have been described in JP 2002193709 and in WO 01/00614. Pyriprole and its preparation have been described in WO 98/45274 and in US 6335357. Amidoflumet and its preparation have been described in US 6221890 and in JP 21010907. Flufenerim and its preparation have been described in WO 03/007717 and in WO 03/007718. Cyflumetofen and its preparation have been described in WO 04/080180. Anthranilamides of formula P6 and their preparation have been described in WO 01/70671, WO 02/48137, WO 03/24222, WO 03/15518, WO 04/67528, WO 04/33468 and WO 05/118552. The malodinitrile compounds have been described in WO 05/063694.

Preferably, the pesticide compounds, which are particularly useful for combating soil living arthropod pests, are selected from the group consisting of:
Organophosphates, in particular Chlorpyrifos, Diazinon, Disulfoton, Phorate, Pirimiphos-methyl or Terbufos;
Carbamates, in particular Alanycarb, Benfuracarb, Carbosulfan, Furathiocarb Pyrethroids, in particular Bifenthrin or Tefluthrin;
Neonicotinoids, in particular Acetamiprid, Clothianidin, Imidacloprid, Nitenpyram, Thiacloprid, Thiamethoxam or Dinetofuran;
GABA antagonist compounds, in particular Ethiprole or Fipronil;
Metaflumizone, Chlorfenapyr, Abamectin, Endosulfan, Spinosad, the compounds of formula P5 and mixtures thereof.

Amongst the pesticide compounds mentioned herein, preference is given to compounds which do not have a repellent activity against the target organism. Likewise, preference is given to compounds which provide a slow-acting toxin against the target organism.

Particularly preferred pesticide compounds, which are particularly useful for combating soil living arthropod pests, include Fipronil, Metaflumizone, Chlorfenapyr and compounds of the formula I, in particular compounds of the formula I, wherein X and Y are chlorine, Z is trifluoromethyl, R¹ is methyl or ethyl, R² and R³ are methyl, or R² and R³ together with the adjacent carbon atom are 2,2-dichlorocyclopropyl or 2,2-dibromocyclopropyl and R⁴ is hydrogen, methyl or ethyl.

Thus a very preferred embodiment of the invention relates to compositions, which contain fipronil.

Another preferred embodiment of the invention relates to compositions, which contain metaflumizone.

Another preferred embodiment of the invention relates to compositions, which contain chlorfenapyr.

A further preferred embodiment of the invention relates to compositions, which contain at least a compound of the formula P5, as defined herein.

The compositions of the invention preferably contain from 0.005 to 8 % by weight, in particular from 0.01 to 5 %, most preferably from 0.01 to 1 % by weight, based on the total weight of the composition except for water, of at least one, e.g. 1, 2 or 3 pesticide compounds.

In the compositions of the invention, the at least one pesticide compound is absorbed to the granules of the superabsorbent polymer. It is assumed that the at least one pesticide compound is distributed non-uniformly within the granules of the pesticide composition, the major portion of the at least one pesticide compound, preferably at least 80 % by weight, being located in the outer parts of the granules, in particular on the surface or close to the surface of the granules. Therefore it is assumed that the granules of the composition comprise a shell region, containing the major portion of the at least one pesticide compound, and a core region containing no or only small amounts of the pesticide compound.

The average particle size of the granules containing the pesticide compound is similar to the size of the superabsorbent polymer granules used for the preparation and will generally be in the range from 0.1 to 5 mm, preferably from 0.2 to 5 mm and more preferably from 0.5 to 4 mm.

The pesticide compositions of the invention also comprise water. The amount of water may vary over a broad range. Though the pesticide composition is generally applied to the soil in the dry state, a certain amount of water is necessary to increase the activity of the composition (bio-enhanced state). In the dry state means that the pesticide composition contains only small amounts of water, e.g. from 0.1 to 15 % by weight, in particular from 0.5 to 10 % by weight, based on the weight of superabsorbent polymer in the composition, and the granules are mechanically stable and can be stored over prolonged period. In the bio-enhanced state, the water absorbent composition usually contains at least 5 % by weight, frequently at least 10 % by weight, preferably at least 15 % by weight, more preferably at least 50 % by weight, based on the weight of superabsorbent polymer in the composition, by weight of water, but the amount of water might be as high as 100 % by weight, based on the weight of superabsorbent polymer in the composition, or higher, the upper limit being the swelling capacity of the superabsorbent polymer in the composition (e.g. up to 150, 300 or 500 times of the weight of the superabsorbent polymer in the composition).

Additionally, the pesticide compositions may comprise co-formulants (additives), i.e. compounds which are present in conventional pesticide formulations or which are incorporated in the pesticide formulation to modify their properties. The amount of co-formulant will generally not exceed 10 % by weight or 5 % by weight, based on the total weight of the composition, except for water. Frequently, co-formulants are present in amounts ranging from 0.01 to 10 %, by weight, in particular from 0.1 to 5 % by weight, based on the total weight of the composition, except for water.

Suitable co-formulants (additives) include
a) surfactants, including dispersants, wetting agents and emulsifiers;
b) organic solvents;
c) defoamers (anti-foams);
d) thickeners;
e) preservatives;
f) dyes or pigments; and
g) neutralizing agents; and
h) attractants.

The surfactants may be non-ionic, anionic, cationic or amphoteric. Suitable surfactants that may be contained in the liquid formulations of the invention are disclosed, e.g. in "McCutcheon's Detergents and Emulsifiers Annual", MC Publishing Corp., Ridgewood, NJ, USA 1981; H. Stache, "Tensid-Taschenbuch", 2nd ed., C. Hanser, Munich, Vienna, 1981; M. and J. Ash, "Encyclopedia of Surfactants", vol. I-III, Chemical Publishing Co., New York, NY, USA 1980-1981. The amount of surfactant will be generally less than 1 % by weight, based on the total weight of the composition except for water.

### Suitable surfactants include

a1) anionic surfactants, including
   - alkylsulfonates, such as lauryl sulfonate or isotridecylsulfonate,
   - alkylsulfates, in particular fatty alcohol sulfates, such as lauryl sulfate, isotridecylsulfate, cetylsulfate, stearylsulfate
   - aryl- and alkylarylsulfonates, such as naphthylsulfonate, dibutylnaphthylsulfonate, dodecyldiphenylether sulfonate, cumylsulfonate, nonylbenzenesulfonate, dodecylbenzene sulfonate;
   - sulfonates of fatty acids and fatty acid esters;
   - sulfates of fatty acids and fatty acid esters;
   - sulfates of alkoxylated alkanoles, such as sulfates of ethoxylated lauryl alcohol;
   - sulfates of alkoxylated alkylphenols;
   - alkylphosphates, C₈-C₁₆ alkylphosphates;
   - dialkylphosphates, C₈-C₁₆ dialkylphosphates;
   - dialkylesters of sulfosuccinic acid, such as dioctylsulfosuccinate,
   - acylsarcosinates,
   - fatty acids, such as stearates,
   - acylglutamates, and
   - ligninsulfonates,
   generally in the form of alkalimetal salts, earth alkaline metal salts or ammonium salts, in particular in the form of sodium, potassium calcium or ammonium salts;
a2) non-ionic surfactants, including
   - alkoxylated alkanoles, in particular ethoxylated fatty alcohols and ethoxylated oxoalcohols, such as ethoxylated lauryl alcohol, ethoxylated isotridecanol, ethoxylated cetyl alcohol, ethoxylated stearyl alcohol, and esters thereof, such as acetates
   - alkoxylated alkylphenols, such as ethoxylated nonylphenyl, ethoxylated dodecylphenyl, ethoxylated isotridecylphenol and the esters thereof, e.g. the acetates
   - alkylglucosides and alkyl polygucosides,
   - copolymers, in particular block-copolymers of ethyleneoxide and propyleneoxide,
   - ethoxylated alkylglucosides and alkyl polygucosides,
   - ethoxylated fatty amines,
   - ethoxylated fatty acids,
   - partial esters, such as mono-, di- and triesters of fatty acids with glycerine or sorbitan, such as glycerine monostearate, sorbitanmonooleat, sorbitantristearat
   - ethoxylated partial esters of fatty acids with glycerine or sorbitan, such as ethoxylated glycerine monostearate
   - ethoxylates of vegetable oils or animal fats, such as corn oil ethoxylate, castor oil ethoxylate, tallow oil ethoxylate,
   - ethoxylates of fatty amines, fatty amides or of fatty acid diethanolamides
a3) cationic surfactants, for example
   - quaternary ammonium compounds, in particular alkyltrimethylammonium salts and dialkyldimethylammonium salts, e.g. the halides, sulfates and alkylsulfates
   - Pyridinium salts, in particular alkylpyridinium salts e.g. the halides, sulfates and C₁-C₄-alkylsulfates and
   - Imidazolinium salts in particular N,N'-dialkylimidazolinium salts, e.g. the halides, sulfates or methoxysulfates.

As regards the surfactants, the term "alkyl" as used herein and if not defined otherwise is a linear or branched alkyl group having from 4 to 30, preferably from 6 to 22 carbon atoms, e.g. n-hexyl, 1-methylpentyl, n-heptyl, n-octyl, 2-ethylhexyl, n-nonyl, n-decyl, 1-methylnonyl, 2-propylheptyl, n-dodecyl, 1-methyldodecyl, n-tridecyl, n-tetradecyl, n-pentadecyl, n-hexadecyl, n-heptadecyl, n-octadecyl, n-nonadecyl, n-eicosyl, and the like. The terms "alkoxylated" and "alkoxylates" means that OH-functions have been reacted with an alkyleneoxide, in particular with a C₂-C₄-alkylene oxide, preferably with ethyleneoxide or with a mixture of ethyleneoxide and propyleneoxide to form an oligoalkyleneoxide group. Likewise the term "ethoxylated" means that OH-functions have been reacted with ethyleneoxide to form an oligoethyleneoxide group. The degree of alkoxylation (or ethoxylation) refers to number average of alkyleneoxide (ethyleneoxide) repeating units and will usually be in the range from 1 to 50 and in particular from 2 to 30. The amount of surfactant will generally not exceed 5% by weight, based on the total weight of the granular pesticide composition and may vary from 0.001 to 5% by weight, preferably from 0.01 to 3% by weight, based on the total weight of the composition or from 1 to 100% by weight, in particular from 5 to 50% by weight, based on the total weight of pesticide compound present in the composition.

Organic solvents include aromatic solvents (for example Solvesso products, xylene), paraffins (for example mineral fractions), alcohols (for example methanol, butanol, pentanol, benzyl alcohol), ketones (for example cyclohexanone, gamma-butyrolactone), pyrrolidones (NMP, NOP), acetates (glycol acetate and glycol diacetate), glycols such as ethylene glycol and propylene glycol, sulfoxides such as dimethylsulfoxide, dimethylamides of carboxylic acids, fatty acids and fatty acid esters such as mono-, di- and triglycerides and the methyl esters of fatty acids. The amount of solvent will be generally not exceed 5% by weight, in particular 3% by weight, based on the total weight of the composition except for water.

Suitable defoamers include polysiloxanes, such as polydimethyl siloxane and waxes. The amount of defoamer will be generally not exceed 1% by weight, based on the total weight of the composition except for water, and the defoamer may be present in amounts ranging from 0.001 to 1% by weight, in particular from 0.001 to 0.8% by weight

Suitable thickening agents (thickeners) include inorganic thickening agents, such as clays, hydrated magnesium silicates and organic thickening agents, such as polysaccharide gums, like xanthan gum, guar gum, gum arabic and cellulose derivatives. The amount of thickening agent will be generally not exceed 1% by weight, based on the total weight of the composition except for water, and the thickener may be present in amounts ranging from 0.001 to 1 % by weight, in particular from 0.001 to 0.8% by weight.

Suitable preservatives to prevent microbial spoiling of the formulations of the invention include formaldehyde, alkyl esters of p-hydroxybenzoic acid, sodium benzoate, 2-bromo-2-nitropropane-1,3-diol, o-phenylphenol, thiazolinones, such as benziso-thiazolinone, 5-chloro-2-methyl-4-isothiazolinone, pentachlorophenol, 2,4-dichlorobenzyl alcohol and mixtures thereof. The amount of preservatives will be generally not exceed 0.1% by weight, based on the total weight of the composition except for water.

Suitable pigments or dyes include pigment blue 15:4, pigment blue 15:3, pigment blue 15:2, pigment blue 15:1, pigment blue 80, pigment yellow 1, pigment yellow 13, pigment red 112, pigment red 48:2, pigment red 48:1, pigment red 57:1, pigment red 53:1, pigment orange 43, pigment orange 34, pigment orange 5, pigment green 36, pigment green 7, pigment white 6, pigment brown 25, basic violet 10, basic violet 49, acid red 51, acid red 52, acid red 14, acid blue 9, acid yellow 23, basic red 10, basic red 108. The amount of dyes and/or pigments will be generally not exceed 1% by weight, based on the total weight of the composition except for water, and the dye or pigment may be present in amounts ranging from 0.001 to 1% by weight, in particular from 0.01 to 0.5% by weight.

Suitable neutralizing agents include buffers, organic and inorganic acids and bases, in particular organic carboxylic acids such as citric acid, maleic acid, pyruvic acid, glycolic acid etc. The amount of neutralizing agents will be generally not exceed 2% by weight, based on the total weight of the composition except for water, and the neutralizing agents may be present in amounts ranging from 0.01 to 1% by weight, in particular from 0.1 to 1% by weight.

Suitable attractant include feeding stimulants and para and/or sex pheromones. Suitable feeding stimulants are chosen, for example, from animal proteins and plant proteins (meat-, fish- or blood meal, insect parts, crickets powder, egg yolk), from fats and oils of animal and/or plant origin, or mono-, oligo- or polyorganosaccharides, especially from sucrose, lactose, fructose, dextrose, glucose, starch, pectin or even molasses or honey, or from salts such as ammonium sulfate, ammonium carbonate or ammonium acetate. Fresh or decaying parts of fruits, crops, plants, animals, insects or specific parts thereof can also serve as a feeding stimulant. Pheromones are known to be more insect specific. Specific pheromones are described in the literature and are known to those skilled in the art. The attractants may be adsorbed on or absorbed in the superabsorbent polymer. The amount of attractant will be generally not exceed 10% by weight, based on the total weight of the composition except for water, and the attractant may be present in amounts ranging from 0.0001 to 10% by weight, in particular from 0.001 to 1% by weight.

The water absorbent pesticide compositions of the invention are prepared by a process which comprises the treatment of superabsorbent polymer with an aqueous liquid composition of the pesticide compound, in particular with an aqueous dilution of a conventional pesticide formulation. In this process, the superabsorbant polymer material is used in the term of polymer granules having an average particle size from 0.1 to 5 mm, in particular from 0.2 to 5 mm or from 0.5 to 4 mm.

As used herein and readily understood by a skilled person, a dilution is a composition which has been obtained by diluting a formulation with a diluent, in particular water or a mixture thereof with an organic solvent.

Treatment of the superabsorbent polymer granules is achieved by spraying an aqueous liquid composition containing at least one pesticide compound and the aqueous liquid carrier to the superabsorbent polymer granules, the method comprising the treatment of the superabsorbent polymer granules with the liquid aqueous pesticide composition, preferably with an aqueous dilution of a conventional pesticide formulation, in a fluidized state (fluidized bed techniques).

The superabsorbent polymer granules may be in the swollen state or preferably in the dry state when treated with the pesticide compound or with a composition containing the pesticide compound. Dry state means that the superabsorbent polymer granules contain not more than 15% of its weight of water, in particular less than 10% by weight. Preferably, the superabsorbent polymer is in the form of granules, in particular dry granules containing less than 10% of their weight of water.

Liquid compositions suitable for treating the superabsorbent polymer granules include conventional aqueous liquid formulations - i.e. formulations containing the pesticide compound dissolved, suspended or emulsified in an aqueous liquid carrier, which can be water or a mixture of water with an organic solvent, or an aqueous dilution of a conventional formulation, which might not be necessarily an aqueous formulation. Suitable conventional formulations for preparing an aqueous dilution include any conventional formulation including liquid formulations as well as solid formulations, which usually contain the pesticide compound and optionally a solid or liquid carrier. Examples of liquid formulations, which can be used for preparing an aqueous dilution, include solutions, soluble concentrates (SL), dispersible concentrates (DC), aqueous and non-aqueous suspensions (SC, FS, OD), emulsifiable concentrates (EC), oil-in-water-emulsions (EW), water-in-oil-emulsions (EO), Micro-emulsions, multiple emulsions, oil enhanced suspension concentrates (OESC), suspo-emulsions etc. Examples of suitable solid formulations, which can be used for preparing an aqueous dilution, include wettable powders (WP), water dispersible granules (WG) and water dispersible tablets (TB). The concentration of the pesticide compound in the conventional formulation may vary from 0.5 to 80% by weight, in particular from 1 to 60% by weight, in particular from 5 to 50% by weight, based on the weight of the conventional formulation.

Preferably, the superabsorbent polymer granules are treated with an aqueous liquid composition containing the at least one pesticide compound, in particular with an aqueous dilution of a conventional formulation. The composition that is applied to the superabsorbent polymer granules is an aqueous liquid composition, - i.e. the liquid carrier is water or a mixture of water with an organic solvent. In the preferred aqueous liquid compositions water will generally make up at least 50% by volume, preferably at least 80% by volume in particular at least 90% by volume, based on the total volume of the liquid carrier. In particular, the aqueous liquid composition is a dilution of a conventional formulation, that is a composition which has been diluted with an aqueous diluent. The aqueous diluent is water or a mixture of at least 50 v/v of water with an organic solvent. In the preferred aqueous diluent water will generally make up at least 60% v/v, preferably at least 99% v/v, based on the total volume of the aqueous diluent.

Preferably, the concentration of the pesticide compound in the aqueous liquid composition suitable for treating the superabsorbent polymer is from 0.01 to 20%, by weight, in particular from 0.1 to 15% by weight and more preferably from 0.5 to 10% by weight, based on the total weight of the composition. Preferably at least a part of the liquid carrier is removed during or after treatment of the superabsorbent polymer, e.g. by evaporation.

In addition to the liquid carrier and the at least one pesticide compound, the liquid compositions, which are applied to the superabsorbent polymer, may contain conventional additives (co-formulants) as described above. These additives are conventional for formulations of pesticide compounds and may depend on the type of formulation used. Since these additives are usually not removed after mixing with the superabsorbent polymer, the compositions of the invention may contain one or more of the aforementioned additives. However, the total amount of these additives will not exceed 10% by weight and is e.g. from 0.1 to 10% by weight, based on the total weight of the composition, except for water.

It has been proven advantageous when the treatment of the superabsorbent polymer granules with the liquid pesticide composition is performed at temperatures from 15 to 90°C, in particular from 30 to 80°C and more preferably from 35 to 60°C. In particular it is preferred to heat the superabsorbent polymer granules to the temperatures given above, before treating them with the liquid formulation.

For purposes of the invention it has been proven advantageous to perform treatment of the superabsorbent polymer granules by using fluidized bed spray coating techniques. In the spray coating process the liquid pesticide composition, in particular an aqueous liquid composition of the pesticide compound, is sprayed on the superabsorbent polymer granules and at least a part of the liquid carrier is removed by evaporation. The thus obtainable water-absorbent pesticide compositions have particularly beneficial properties and therefore they are also subject of the present invention as well as the spray coating process described herein.

Preferably, the viscosity of the liquid formulation which is used for spray coating does not exceed 10 mPa·s, and ranges in particular from 0.8 to 5 mPa·s, more preferably from 0.9 to 2 mPa.s (at room temperature).

In the fluidized bed spray coating, the liquid pesticide composition is sprayed, e.g. by means of one or more nozzles, to the superabsorbent polymer particles, which are maintained in a fluidized state during spraying. Fluidized state means that the apparent density of the superabsorbent polymer particles is reduced by mechanical means or in particular by introducing a gas stream into the superabsorbent polymer granules, thereby taking them upwards and maintaining them in fluidized bed state.

Suitable fluidized bed processes work according to the principle that the liquid formulation of the at least one pesticide is finely atomized and the droplets randomly collide with the superabsorbent polymer granules which are held in a fluidized state. The size of the droplets should be inferior to the particle size of the superabsorbent polymer granules and usually does not exceed 500 µm. Droplet size can be manipulated in a well known manner by the type of nozzle, the spraying conditions i.e. temperature, concentration, viscosity of the liquid formulation. The droplets of the liquid pesticide formulation may be introduced either concurrently with the particle flow of the polymer granules (bottom-spray coating) or from the side into the particle flow (tangential spray coating), and may also be sprayed from the top onto a fluidized bed of the superabsorbent polymer granules (top spray coating).

Preferably the fluidized state of the superabsorbent polymer granules is achieved by means of a carrier gas which is introduced into the superabsorbent polymer granules and which keeps them in a fluidized bed state. Suitable carrier gas include air, and inert gas such as nitrogen, argon and the mixtures thereof.

It is advantageous that the gas stream of the carrier gas, which preferably enters the spray drying apparatus from below, is chosen such that the total amount of the superabsorbent polymer granules is fluidized in the apparatus. The gas velocity for the fluidized bed is usually above the minimum fluidization velocity (measurement method described in Kunii and Levenspiel "Fluidization engineering" 1991) and below the terminal velocity superabsorbent polymer granules, preferably 10% above the minimum fluidization velocity. The gas stream also acts to vaporize the liquid carrier, i.e. water or the organic solvents.

Fluidized bed spray coating may be preformed in a batch or continuously. Continuous means that fresh superabsorbent polymer particles are continuously fed to the spray coating device and that treated superabsorbent polymer is continuously taken from the spray coating device after passing all spraying-zones inside the device.

Suitable fluidized bed spray coating devices, which make use of fluidized bed technique, include for example the fluidized or suspended bed coaters and spouted bed coaters familiar in seed dressing and in the pharmaceutical industry. Examples for spray coating processes and devices which make use of for fluidized bed techniques and which are suitable for the process of the present invention include the spray mixers of the Telschig type, the Wurster process and the Glatt-Zeller process.

The Wurster and the Glatt-Zeller processes are described for example in "Pharmazeutische Technologie, Georg Thieme Verlag, 2nd edition (1989), pages 412-413" and also in "Arzneiformenlehre, Wissenschaftliche Verlagsbuchhandlung mbH, Stuttgart 1985, pages 130-132". Particularly suitable batch and continuous fluidized bed processes on a commercial scale are also described in Drying Technology, 20(2), 419-447 (2002). Mixers of the Telschig type are e.g. described in Chemie-Technik, 22 (1993), Nr. 4, p. 98 ff. Each of these processes can be used by analogy for the treatment of superabsorbent polymer granules with pesticide formulations. The spouted bed technology uses a simple slot instead of a screen bottom to generate the fluidized bed and is particularly suitable for materials which are difficult to fluidize.

Suitable spray drying / spray coating equipments making use of the fluidized bed technique are commercially available, e.g. the laboratory devices of type series MP-Micro™, MP-1 Multi-Processor™, and Strea-1™ and the production devices of type series Precision Coater™ and Multi-Processor™ (all of GEA-Aeromatic Fielder AG, Switzerland); the fluidized bed dryers or granulaters of the type series WST and WSG, the powder coater granulators of the type series GPCG, the continuous granulation devices of the type series AGT, the continuous fluidized bed dryers of the type series GF, the semi continuous fluidized bed dryers of the Multicell™ series, the spouted bed coaters of the Procell™ series (all of Glatt Maschinen- und Apparatebau AG). A suitable apparatus for the Glatt-Zeller process has also been described for example in US 5,211,985.

The thus obtainable water absorbent pesticide compositions contain the at least one pesticide compound and the superabsorbent polymers, water and optionally further additives contained in the liquid formulation. The relative amounts of these constituents are given above. The pesticide compound is mainly located on the surface of the granules, however, it may be partly absorbed into the interior of the granules.

The water absorbent pesticide compositions according to the invention are suitable for combating arthropod pest, in particular insects and Malacostraca, nematodes and snails.

The compositions of the invention are especially useful for combating of soil-living pest, in particular soil-living arthropods such as insects, especially insect species of the orders of Lepidoptera, Isoptera, Coleoptera, Collembola, Diptera, Dermaptera, Hymenoptera, and Orthoptera, in particular suborder Ensifera, and also arthropod species of the class Malacostraca, in particular of the order Isopoda. The compositions described herein are suitable for systemic and/or non-systemic control of soil-living pests. They are active against all or some stages of development of the pests. They are particular suitable for non-systemic control of soil-living pest.

Examples for arthropod species, which can be combated with the compositions of the invention include:
- from the order of Lepidoptera, for example *Agrotis ypsilon, Agrotis segetum, Agrotis subterranea, Peridroma saucia, Crambus spp., Diatraea grandiosella, Feltia subterranea, Peridroma saucia, Euxoa spp.* and *Phthorimaea operculella;*
- from the order of Coleoptera (beetles), for example *Agrilus sinuatus, Agriotes lineatus, Agriotes obscurus, Amphimallon solstitialis, Atomaria linearis, Ataenius spp., Bruchus rufimanus, Calendra spp., Cassida nebulosa, Chaetocnema tibialis, Conoderus vespertinus, Crioceris asparagi, Cyclocephala hirta, Diabrotica longicornis, Diabrotica 12-punctata, Diabrotica barberi, Diabrotica virgifera, Limonius spp, Limonius californicus, Lissorhoptrus oryzophilus, Melanotus communis, Melolontha hippocastani, Melolontha melolontha, Naupactus leucoloma, Ortiorhynchus sulcatus, Otiorrhynchus ovatus, Phyllotreta chrysocephala, Phyllophaga sp., Phyllopertha horticola, Phyllotreta nemorum, Phyllotreta striolata, Cosmopolites sardides* and *Popillia japonica;*
- from the order of Isoptera (termites), e.g. *Calotermes flavicollis,Coptotermes formosanus, Cryptotermes spp., Heterotermes sp., Kalotermes spp., Leucotermes flavipes, Macrotermes spp., Mastotermes spp., Microtermes spp., Nasutitermes spp., Neotermes spp., Odontotermes spp., Prorhinotermes spp., Reticulitermes lucifugus Reticulitermes flavipes, Reticulitermes. hesperus. Schedorhinotermes spp.,* and *Termes natalensis;*
- from the order Collembola (springtails), e.g. *Bourleteilla hortensis, Sminthurus viridis,* and *Hypogastrura amata;*
- from the order Diptera (flies), e.g. *Bibio albipennis, Bibio hortulanus, Bibio marci, Bradysia spp., Delia spp., Psycoda spp., Scatella stagnalis, Sciara sp., Tipula* oleracea, and *Tipula paludosa;*
- from the order Dermaptera (earwigs), e.g. *Chelisoches morio, Forficula auricularia,* and *Labidura riparia*
- from the order Hymenoptera (ants), e.g. *Camponotus spp., Crematogaster ashmeadi, Formica spp., Lasius emarginatus Lasius brunneus, Lasius niger, Linepithema humile, Messor spp., Monomorium pharaonis, Paratrechina spp., Pheidole spp., Pogonomyrmex spp., Solenopsis invicta, Solenopsis molesta, Solenopsis xyloni, Solenopsis richteri, Tapinoma sessile, Technomyrmex albipes, Tetramorium caespitum,* and *Wasmannia auropunktata;*
- from the order Orthoptera, suborder Ensifera (crickets) e.g. *Gryllotalpa spp., Neocurtilla hexadactyla,* and *Scapteriscus ssp.*

The compositions of the invention are particularly useful for combating Diabrotica species and termites.

The pesticide compositions described herein can also be successfully used for combating nematodes. Nematodes which can be combated with the compositions of the invention particularly include plant parasitic nematodes such as root-knot nematodes, *Meloidogyne arenaria, Meloidogyne chitwoodi, Meloidogyne exigua, Meloidogyne hapla, Meloidogyne incognita, Meloidogyne javanica* and other *Meloidogyne species;* cyst nematodes, *Globodera rostochiensis, Globodera pallida, Globodera tabacum* and other *Globodera species, Heterodera avenae, Heterodera glycines, Heterodera schachtii, Heterodera trifolii,* and other *Heterodera species;* seed gall nematodes, *Anguina funesta, Anguina tritici* and other *Anguina species;* stem and foliar nematodes, *Aphelenchoides besseyi, Aphelenchoides fragariae, Aphelenchoides ritzemabosi* and other *Aphelenchoides species;* sting nematodes, *Belonolaimus longicaudatus* and other *Belonolaimus species;* pine nematodes, *Bursaphelenchus xylophilus* and other *Bursaphelenchus species;* ring nematodes, *Criconema species, Criconemella species, Criconemoides species,* and *Mesocriconema species;* stem and bulb nematodes, *Ditylenchus destructor, Ditylenchus dipsaci, Ditylenchus myceliophagus* and other *Ditylenchus species;* awl nematodes, *Dolichodorus species;* spiral nematodes, *Helicotylenchus dihystera, Helicotylenchus multicinctus* and other *Helicotylenchus species, Rotylenchus robustus* and other *Rotylenchus species;* sheath nematodes, *Hemicycliophora species and Hemicriconemoides species; Hirshmanniella* species; lance nematodes, *Hoplolaimus columbus, Hoplolaimus galeatus* and other *Hoplolaimus species;* false root-knot nematodes, *Nacobbus aberrans* and other *Nacobbus species;* needle nematodes, *Longidorus elongates* and other *Longidorus species;* pin nematodes, *Paratylenchus species;* lesion nematodes, *Pratylenchus brachyurus, Pratylenchus coffeae, Pratylenchus curvitatus, Pratylenchus goodeyi, Pratylencus neglectus, Pratylenchus penetrans, Pratylenchus scribneri, Pratylenchus vulnus, Pratylenchus zeae* and other *Pratylenchus species; Radinaphelenchus cocophilus* and other *Radinaphelenchus species;* burrowing nematodes, *Radopholus similis* and other *Radopholus species;* reniform nematodes, *Rotylenchulus reniformis* and other *Rotylenchulus species; Scutellonema species;* stubby root nematodes, *Trichodorus primitivus* and other *Trichodorus species; Paratrichodorus minor and other Paratrichodorus species;* stunt nematodes, *Tylenchorhynchus claytoni, Tylenchorhynchus dubius* and other *Tylenchorhynchus species* and *Merlinius species;* citrus nematodes, *Tylenchulus semipenetrans* and other *Tylenchulus species;* dagger nematodes, *Xiphinema americanum, Xiphinema index, Xiphinema diversicaudatum* and other *Xiphinema species;* and other plant parasitic nematode species.

The pesticide compositions described herein can also be successfully used for combating snails of the family stylommatophora.

The soil living pests may generally be controlled by contacting the target pest, its food supply, or its locus with a pesticidally effective amount of pesticidal compositions as described herein. "Locus" means a habitat, breeding ground, area, material or environment in which a pest or parasite is growing or may grow. In general, "pesticidally effective amount" means the amount of active ingredient needed to achieve an observable effect on growth, including the effects of necrosis, death, retardation, prevention, and removal, destruction, or otherwise diminishing the occurrence and activity of the target organism. The pesticidally effective amount can vary for the various compositions used in the invention. A pesticidally effective amount of the compositions will also vary according to the prevailing conditions such as desired pesticidal effect and duration, target species, locus, mode of application, and the like.

The water-absorbent pesticide compositions of the present invention are particularly useful for combating soil living pests and thus the composition is preferably applied to the soil. In particular the composition is introduced into the soil or applied subterraneously, e.g. from 0.5 to 50 cm below. The pesticide composition, however, can also be applied onto the soil.

The amount of pesticide compound, which is necessary to achieve effective control of the target pest may depend on the type of pest and pesticide compound and may vary from 0.1 g to 2000 g per hectare, desirably from 1 g to 600 g per hectare, more desirably from 5 g to 500 g per hectare of pesticide compound. As a rule of thumb, the water-absorbent pesticide composition allow a reduction of the amount of pesticide compound, which is necessary to achieve effective control of the target pest, of at least 20%, in particular of at least 40%, in comparison with conventional pesticide granule formulations.

As outlined above, the presence of water is necessary to activate the compositions of the present invention. Small amounts such as 5% by weight, based on superabsorbent polymer in the composition, may be sufficient, however effectiveness increases, when the amount of water exceeds 10% by weight, preferably 20% by weight, in particular 50% by weight, in particular 100% by weight, based on superabsorbent polymer in the composition. Due to the swelling properties of the superabsorbent polymers in the composition, the dry composition can be activated either by addition of water or by absorbing humidity from the atmosphere or from the soil. Preferably the compositions are applied to the soil in their dry state and optionally activated by addition of water.

A preferred embodiment of the present invention relates to the protection of buildings such as houses, outhouses, carports, factories etc., which are susceptible to attack of or infestation with arthropod soil-living pests, in particular termites. In this embodiment, the pesticide composition may be applied to the soil to form a treated area completely surrounding a building which is to be protected against attack of or infestation with the soil-living pest. The treated area surrounding the building can be prepared by digging a narrow trench into the soil, introducing the water absorbent pesticide composition into the trench, optionally moistening with water and refilling the trench, e.g. with the excavated soil. Moistening can also be performed after refilling the trench. Likewise, the excavation can be mixed with the water absorbent pesticide composition and thereafter the mixture is optionally moistened and refilled into the trench. It is likewise possible to apply the herein described pesticide composition onto the soil. It is then, however, be advantageous to cover the composition with soil. The amounts of pesticide, which is necessary to achieve effective control may vary depending on the pesticide compound in the composition but will generally be from 0.05 mg/m² to 100 mg/m² , in particular from 0.1 mg/m² to 50 mg/m² of the treated area and calculated as the pure pesticide compound. It is likewise possible to apply the pesticide composition to the soil to form discrete treated areas along the perimeter of the building.

In a similar manner, any material which is susceptible to attack of or infestation with arthropod soil-living pests, in particular termites and/or ants, can be protected, said materials including wooden materials such as trees, board fences, sleepers, furniture, etc., and wooden construction materials, but also leathers, fibers, vinyl articles, electric wires and cables etc. In order to protect the material it is, however, also possible to apply the pesticide compositions of the invention to lumbered articles such as surfaces of the under-floor concrete, alcove posts, beams, plywoods, furniture, etc., wooden articles such as particle boards, half boards, etc. and vinyl articles such as coated electric wires, vinyl sheets, heat insulating material such as styrene foams, etc.

Another preferred embodiment of the present invention relates to the protection of fields of cultivated plants, which are susceptible to attack of or infestation with arthropod soil-living pests. In this embodiment, effective control is achieved by incorporation the pesticide composition into the soil in the fields which are to be protected against attack or infestation of the soil-living pests. Application may be broadcast, in furrows or bands. If necessary, the compositions can be activated by addition of water. It may be advantageous to cover the composition with soil. The amounts of pesticide, which is necessary to achieve effective control may vary, depending on the pesticide compound contained in the pesticide composition. The amount will be generally from 0.5 to 1000 g/ha in particular from 1 to 500 g/ha, calculated as the pure pesticide compound. This embodiment is particularly useful for achieving effective control of *Diabrotica* sp, white grubs *(Phyllophaga,* etc.), wireworms *(Agriotes,* etc.) and termites. Crop, which can be protected that way include soybeans, beans, oil seed rape, potatoes, corn, maize, wheat, barley, oats, sorghum, rice, sugar beet, sunflower, sugarcane, turf and forage, peas, oil palm, coffee, mangoes, rubber, cotton, ornamentals and vegetable such as cucurbits, tomatoes, lettuce, carrots, onions and cruciferous.

In case of application against ants doing harm to crops or human beings, the composition of the present invention may be directly applied to the nest of the ants or to its surrounding.

In another embodiment of the invention, the pesticide compositions are used for the protection of seeds against harmful pest. In this method the seed material is applied to the soil together with the granular pesticide composition described herein. Preferably, a mixture of the granular pesticide composition and the seed is applied, when sowing seed. However it is also possible to apply the seed material and the pesticide composition separately, but ensuring that the seed and the pesticide composition are both present in the soil. The amounts of pesticide, which is necessary to achieve effective protection may vary, depending on the pesticide compound contained in the pesticide composition. The amount will be generally chosen that the amount of pesticide compound contained in the composition is from 0.1 g to 10 kg per 100 kg of seed, preferably from 1 g to 5 kg per 100 kg of seed, calculated as pesticide compound. This embodiment is particularly useful for achieving effective control of Seed, which can be protected that way include soybeans, beans, oil seed rape, potatoes, corn, maize, wheat, barley, oats, sorghum, rice, seeds of sugar beet, sunflower, sugarcane, turf and forage, peas, cotton, ornamentals and of vegetable such as cucurbits, tomatoes, lettuce, carrots, onions and cruciferous.

The following examples are intended to further illustrate the invention.

Superabsorbent Polymer SAP1: Granules of a crosslinked copolymer of potassium acrylate and acrylamide having a water absorbtion capacity for DI water of 320 g/g and particle size from 0.85 to 2 mm (Aquasorb 3005 K2, of SNF FLOERGER, Andrézieux, France).

Superabsorbent Polymer SAP2: Granules of a crosslinked copolymer of potassium acrylate and acrylamide having a water absorbtion capacity for DI water of 350 g/g and particle size from 0.3 to 1 mm (Aquasorb 3005 KM, of SNF FLOERGER, Andrézieux, France).

Superabsorbent Polymer SAP3: Granules of a crosslinked copolymer of sodium acrylate and acrylic acid and particle size from 0.1 to 0.5 mm.

Pesticide formulation P1: Aqueous suspension concentrate of Fipronil, containing 20% by weight of Fipronil, 40% by weight of corn oil, 13% by weight of surfactant, 0.7% by weight of antifoam, 0.2% by weight of bactericide and water ad 100% by weight.

Pesticide formulation P2: Aqueous suspension concentrate, containing 50% by weight of Fipronil, 5% by weight of propylene glycol, 6% by weight of surfactant, 0.7% by weight of defoamer, 1.0% by weight of red dye, 0.2% by weight of thickener, 0.2% by weight of bactericide and water ad 100% by weight.

Pesticide formulation P3: Aqueous suspension concentrate of a compound P5a, containing 20% by weight of compound P5a, 5% by weight of propylene glycol, 6.4% by weight of surfactant, 0.5% by weight of defoamer, 0.2% by weight of xanthan gum, 0.5% by weight of bactericide and water and 100% by weight.

### Compound P5a:

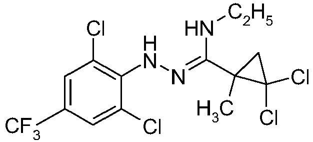

Pesticide formulation P4: Fipronil microemulsion, containing 5% by weight of Fipronil, 10.5% by weight of tributyl phosphate, 2.5% by weight of dimethyl sulfoxide, 42.5% by weight of N,N-dimethyloctane amide, 20.0% by weight of surfactant, and water ad 100 %.

Pesticide formulation P5: Aqueous suspension concentrate, containing 25% by weight of Fipronil, 5% by weight of propylene glycol, 3.5% by weight of surfactant, 0.6% by weight of defoamer, 1.0% by weight of red dye, 0.3% by weight of thickener, 0.15% by weight of bactericide and water ad 100% by weight.

Pesticide formulation P6: Aqueous suspension concentrate, containing 50% by weight of Fipronil, 3% by weight of propylene glycol, 4.3% by weight of surfactant, 0.4% by weight of defoamer, 0.25% by weight of thickener, 0.2% by weight of bactericide and water ad 100% by weight.

### Example 1:

The pesticide formulation P1 was diluted with equal amounts of an aqueous solution of citric acid and of an aqueous solution of a food coloring dye (FD &C Blue No. 1, BASF AG) to a fipronil content of 3.4% by weight. The concentration of citric acid in the obtained dilution was 6.7% by weight, the concentration of the dye was 1.0% by weight. The resulting dilution had a viscosity of 1.05 mPa.s (at 25°C).

295 g of superabsorbent polymer SAP1, having a water content of < 0.05 g/g were given into conventional laboratory fluidized bed dryer (Aeromatic Fielder - Strea-1™) and fluidized and heated to 40 to 50°C by means of a stream of hot air (70°C). The diluted pesticide formulation was then sprayed with about 300 ml/h at 40 to 50°C to the superabsorbent polymer. After 10 min. spraying was stopped and the obtained granular material was further fluidized for 10 min. at this temperature. The thus obtained granular material had the composition given below.
1.0 parts by weight of Fipronil,
2.0 parts by weight of citric acid,
0.3 parts by weight of dye,
0.95 parts by weight of surfactant,
0.04 parts by weight of antifoam,
0.01 parts by weight of bactericide,
2.0 parts b weight of corn oil,
4.0 parts by weight of water,
ad 100 parts by weight of superabsorbent polymer SAP1.

### Examples 2 to 5

The pesticide formulation P2 was diluted with an aqueous solution of citric acid to a fipronil content of 0.05%, 0.1%, 0.2% and 0.42% by weight. The concentration of citric acid in the dilutions was 1.7% by weight. The resulting dilutions had a viscosity of 1.05 mPa.s (at 25°C).

Similar to example 1, the dilutions were sprayed to superabsorbent polymer SAP1, having a water content of < 0.05 g/g. The thus obtained granular materials had the composition given in table 1.

### Example 6

Similar to examples 2 to 5, the pesticide formulation P2 was diluted with an aqueous solution of citric acid to a fipronil content of 0.05% by weight. The concentration of citric acid was 6.7% by weight, the concentration of the dye was 1.0% by weight. The resulting dilution had a viscosity of 1.05 mPa.s (at 25°C).

Similar to examples 2 to 5, the dilution was sprayed to superabsorbent polymer SAP2, having a water content of < 0.05 g/g. The thus obtained granular materials had the composition given in table 1.

**Table 1**

| Ingredient [% b.w.]* | Example 2 | Example 3 | Example 4 | Example 5 | Example 6 |
|---|---|---|---|---|---|
| Fipronil | 0.015 | 0.03 | 0.06 | 0.125 | 0.015 |
| Propylenglyocl | 0.0015 | 0.003 | 0.006 | 0.0125 | 0.0015 |
| Surfactant | 0.001 | 0.002 | 0.004 | 0.009 | 0.0028 |
| Dye | 0.0003 | 0.0006 | 0.0012 | 0.0025 | 0.002 |
| Thickener | 0.012 | 0.024 | 0.048 | 0.096 | 0.072 |
| Citric acid | 0.5 | 0.5 | 0.5 | 0.5 | 0.75 |
| Defoamer | 0.1 | 0.2 | 0.4 | 0.5 | 0.6 |
| Water | 1 | 1 | 1 | 1 | 1 |
| Superabsorbent polymer ad 100 | 98.37 (SAP1)* | 98.21 (SAP1) | 97.99 (SAP1) | 97.46 (SAP1) | 97.56 (SAP2) |

| | | | | | |
|---|---|---|---|---|---|
| * sieved to a particle size < 1.25 mm | | | | | |

### Examples 7 to 10

The pesticide formulation P3 was diluted with equal amounts of an aqueous solution of citric acid and of a aqueous solution of a pigment (X-Fast Yellow BASF AG) to an active content of 0.05%, 0.10%, 0.20% and 0.42% by weight. The concentration of citric acid in the obtained dilution was 1.67% by weight, the concentration of dye was 0.17% by weight. The resulting dilutions had a viscosity of 1.05 mPa.s (at 25°C).

Similar to example 1, the dilutions were sprayed to superabsorbent polymer SAP1, having a water content of < 0.05 g/g. The thus obtained granular materials had the composition given in table 2.

**Table 2:**

| Ingredient [% b.w.]* | Example 7 | Example 8 | Example 9 | Example 10 |
|---|---|---|---|---|
| Compound P5a | 0.015 | 0.03 | 0.06 | 0.125 |
| Propylenglyocl | 0.0038 | 0.0075 | 0.015 | 0.031 |
| Surfactant | 0.0018 | 0.0036 | 0.0072 | 0.015 |
| Pigment | 0.05 | 0.05 | 0.05 | 0.05 |
| Thickener | 0.000015 | 0.0003 | 0.006 | 0.00125 |
| Citric acid | 0.5 | 0.5 | 0.5 | 0.5 |
| Defoamer | 0.0004 | 0.0008 | 0.0016 | 0.0033 |
| Bactericide | 0.0003 | 0.0006 | 0.001 | 0.003 |
| Water | 1 | 1 | 0.4 | 1 |
| Superabsorbent polymer SAP1 | 98.43 | 98.41 | 98.96 | 98.27 |

### Example 11

The pesticide formulation P4 was diluted with an aqueous solution of citric acid and to an active content of 0.417% by weight. The resulting dilution had a viscosity of 1.05 mPa.s (at 25°C) and the concentration of citric acid was 1.67% by weight.

Similar to example 1, the solution was spray to superabsorbent polymer SAP1, having a water content of < 0.05 g/g. The thus obtained granular materials had the composition given below.
0.125 parts by weight of Fipronil
0.5 parts by weight of citric acid
0.326 parts by weight of tributylphosphate
0.063 part by weight of dimethylsulfoxide
1.533 parts by weight of surfactants
0.025 parts of defoamer
1.0 parts by weight of water and
96.43 parts by weight of superabsorbent polymer SAP1

### Examples 12 to 15

The compositions of examples 12 to 15 were prepared similar to examples 2 to 5 by spraying an aqueous dilution of pesticide formulations P2 or P5 to superabsorbent polymers SAP1 or SAP3. The thus obtained granular materials had the composition given in table 3.

**Table 3**

| Ingredient [% b.w.]* | Example 12 | Example 13 | Example 14 | Example 15 |
|---|---|---|---|---|
| Fipronil | 2.0 | 2.0 | 2.0 | 3.0 |
| Propylenglyocl | 0.20 | 0.40 | 0.12 | 0.60 |
| Surfactant | 0.24 | 0.16 | 0.15 | 0.24 |
| Pigment | 0.04 | 0.04 | 0.02 | 0.06 |
| Thickener | 0.01 | 0.024 | 0,01 | 0.036 |
| Citric acid | 1,0 | 1,0 | 1,0 | 1,0 |
| Defoamer | 0.028 | 0.048 | 0.02 | 0.072 |
| Bactericide | 0.008 | 0.012 | 0.08 | 0.018 |
| Water | 3 | 3 | 3 | 3 |
| Superabsorbent polymer | 93,47 (SAP1) | 93,32 (SAP1) | 93,6 (SAP1) | 91,97 (SAP 3) |

### Examples 16 to 18

The compositions of examples 16 to 18 were prepared similar to examples 2 to 5 by spraying an aqueous dilution of pesticide formulations P2 or P5 to superabsorbent polymers SAP1 or SAP3. The thus obtained granular materials had the composition given in table 4.

**Table 4**

| Ingredient [% b.w.]* | Example 16 | Example 17 | Example 18 |
|---|---|---|---|
| Fipronil | 2,0 | 4,0 | 4,0 |
| Propylenglyocl | 0.2 | 0.4 | 0.8 |
| Surfactant | 0.24 | 0.48 | 0.32 |
| pigment | 0.04 | 0.08 | 0.08 |
| Thickener | 0.01 | 0.019 | 0,048 |
| Citric acid | 1,0 | 1,0 | 1,0 |
| Defoamer | 0.024 | 0.056 | 0.096 |
| Bactericide | 0.001 | 0.002 | 0.0024 |
| Water | 3 | 3 | 3 |
| Superabsorbent polymer | 93,49 (SAP3) | 93,96 (SAP1) | 90,65 (SAP3) |

### Biological tests:

### Test example 1: Control of eastern subterranean termite

Laboratory assays were conducted to compare the efficacy of compositions of examples 12 to 18 against eastern subterranean termite, *Reticulitermes flavipes,* via soil exposure, in comparison with a conventional suspension concentrate.

Bioassays were conducted in 60 X 15 mm Petri dishes with a 1% agar layer for moisture and 15 termite workers per dish. Granular formulations were incorporated into the Princeton sandy loam soil by hand shaking and mixing with use of a commercial jar roller. After incorporation, water was added to field capacity, and the soil was rolled again. The soil was allowed to sit at field capacity overnight. The soil was then air dried for 24 hours prior to introduction into the test dishes. Conventional suspension concentrate of fipronil was used as a standard, and untreated soil used as a control. Test dishes were maintained at approximately 26°C and 85% RH. Dishes were observed daily for 13 days for mortality. The concentration of active ingredient was 0.0004875% (w/w) in trench. The results are presented in table 5.

**Table 5:**

| Example | D¹⁾ [mm] | Conc.²⁾ | Mean Cumulative Mortality at days after treatment (DAT) ^{3, 4)} | | | | | | |
|---|---|---|---|---|---|---|---|---|---|
| | [mm] | [%bw] | 1 DAT | 3 DAT | 5 DAT | 6 DAT | 8 DAT | 11 DAT | 13 DAT |
| 12 | >2 | 2 | 1.3 | 4.0 | 69.3 | 84.0 | 94.7 | 97.3 | 100 |
| 13 | >2 | 2 | 1.3 | 14.7 | 89.3 | 93.3 | 94.7 | 98.7 | 100 |
| 14 | >2 | 2 | 1.3 | 4.0 | 36.0 | 77.3 | 88.0 | 94.7 | 97.3 |
| 15 | < 0.5 | 3 | 73.8 | 94.7 | 100 | - | - | - | - |
| 16 | < 0.5 | 2 | 85.3 | 98.7 | 100 | - | - | - | - |
| 17 | < 2 | 4 | 1.3 | 22.7 | 81.3 | 84.0 | 90.7 | 100 | - |
| 18 | < 0.5 | 4 | 80.0 | 100 | - | - | - | - | - |
| SC⁵⁾ | - | 9.1 | 0.0 | 0.0 | 1.3 | 1.3 | 2.7 | 4.0 | 4.0 |
| Control | - | - | 1.3 | 1.3 | 1.3 | 1.3 | 1.3 | 2.7 | 2.7 |

| | | | | | | | | | |
|---|---|---|---|---|---|---|---|---|---|
| ¹ Granular size according to sieve analysis ² concentration of fipronil in the composition ³ Each mean is based on 75 termites (5 replications/treatment). ⁴ Test initiated 7. December 2004. ⁵ Commercial SC of fipronil. | | | | | | | | | |

### Test examples 2 and 3: Control of eastern subterranean termite - efficacy and repellency

Petri Dish Testing Methodology: The compositions were incorporated into 250g of Princeton sandy loam soil at a rate of 0.0625% a.i. of Fipronil in 8 oz. round glass Qorpak jars. Soil was mixed thoroughly by hand and on a commercial jar roller for ∼1 hour. Water (17.5 ml = field capacity) was added to each jar and the soil was mixed again via the same process. Soil was placed into plastic weigh boats and allowed to dry overnight. The bioassay was conducted in a 60 X 15 mm plastic Petri dish with 2 grams of treated soil per dish. Fifteen termite workers (Reticulitermes flavipes) were introduced into each dish and a 1 cm X 1 cm piece of moist filter paper was used as a food source. The test was read for mortality/moribundity and intoxication. Each treatment was replicated five times and counts were made at 1 and 2 DAT. The results are presented in table 6.

**Table 6: Mean percent mortality of the water absorbent fipronil formulations at 1 and 2 DAT against Eastern subterranean termites, Reticulitermes flavipes, in a forced Petri dish assay**

| Treatment (0.0625% a.i. in trench) | | Mean % mortality at days after treatment (DAT) | |
|---|---|---|---|
| | % a.i.¹⁾ | 1 DAT | 2 DAT |
| Example 15 | 3.0 | 100.0 | - |
| Example 16 | 2.0 | 100.0 | - |
| Example 18 | 4.0 | 100.0 | - |
| Example 2 | 0.015 | 100.0 | - |
| Example 3 | 0.03 | 97.3 | 100.0 |
| Example 4 | 0.06 | 96.0 | 98.7 |
| Suspension concentrate ²⁾ | 9.1 | 100.0 | - |
| Control | - | 1.3 | 1.3 |

| | | | |
|---|---|---|---|
| 1) Concentration of fipronil in formulation 2) Commercial Suspension concentrate of Fipronil | | | |

Tunnel Tube Testing Methodology: The compositions were incorporated into 250g of Princeton sandy loam soil at a rate of 0.0625% of Fipronil in 8 oz. round glass Qorpak jars. Soil was mixed thoroughly by hand and on a commercial jar roller for ∼1 hour. Water (17.5 ml = field capacity) was added to each jar and the soil was mixed again via the same process. Soil was placed into plastic weigh boats and allowed to dry overnight (soil treated on 11/15/2005). Bioassay was conducted in PVC tubes. Assay setup (from bottom to top of tube): 2 cm of moist, washed wood fiber, 1cm plug of 5% agar, 5 cm of treated Princeton Sandy Loam soil (field capacity of water for 100 g of soil), 1 cm plug of 5% agar. Thirty termite workers (Reticulitermes flavipes) were introduced into the top of each tube (on top of agar plug). Test was assessed for tunnelling (cm) in the soil column at 1 & 2 DAT and for mortality/moribundity and intoxication at 3 DAT. Mortality assessments were made using a destructive sampling method. Each treatment was replicated six times. The results are presented in tables 7 and 8.

**Table 7: Tunnelling of Eastern subterranean termites, Reticulitermes flavipes, through treated soil in a tunnel tube repellency assay**

| Treatment (0.0625% a.i. in trench) | | Distance tunnelled (cm) at days after treatment (DAT) |
|---|---|---|
| | % a.i. ¹⁾ | 2 DAT |
| Example 15 | 3.0 | 0.18 |
| Example 16 | 2.0 | 0.17 |
| Example 18 | 4.0 | 0.22 |
| Example 2 | 0.015 | 0.13 |
| Example 3 | 0.03 | 0.00 |
| Example 4 | 0.06 | 0.10 |
| Suspension concentrate ²⁾ | 9.1 | 0.25 |
| Control | - | 5.00 |

| | | |
|---|---|---|
| 1) Concentration of fipronil in formulation 2) Commercial Suspension concentrate of fipronil | | |

**Table 8: Mean percent mortality of formulations at 1 DAT against Eastern subterranean termites, Reticulitermes flavipes, in a tunnel tube repellency assay**

| Treatment (0.0625% a.i. in trench) | | Mean % mortality at days after treatment (DAT) |
|---|---|---|
| | % a.i. ¹⁾ | 1 DAT |
| Example 15 | 3.0 | 100.0 |
| Example 16 | 2.0 | 100.0 |
| Example 18 | 4.0 | 100.0 |
| Example 2 | 0.015 | 99.4 |
| Example 3 | 0.03 | 100.0 |
| Example 5 | 0.125 | 100.0 |
| Suspension concentrate ²⁾ | 9.1 | 100.0 |
| Control | - | 11.7 |

| | | |
|---|---|---|
| 1) Concentration of fipronil in formulation 2) Commercial Suspension concentrate of fipronil | | |

### Test example 4: Control of eastern subterranean termite

Test example 4 was performed similar to test example 1, using formulations containing compound P5a. Comparison of a superabsorber formulation of compound P5 to a DC formulation of compound P5 for bioactivity against workers of the eastern subterranean termite, Reticulitermes flavipes, via soil (Princeton sandy loam) incorporation;

| | | Mean cumulative % mortality at days after treatment (DAT) ^{1, 2)} | | | | | |
|---|---|---|---|---|---|---|---|
| Treatment | Rate (ppm) | 1 DAT | 2 DAT | 3 DAT | 5 DAT | 6 DAT | 7 DAT |
| Example 10³⁾ | 10 | 81.3 | 89.3 | 100.0 | - | - | - |
| | 100 | 98.7 | 100.0 | - | - | - | - |
| Compound P5a⁴⁾ | 10 | 100.0 | - | - | - | - | - |
| | 100 | 100.0 | - | - | - | - | - |
| Acetone Control | | 2.7 | 1.3 | 1.3 | 1.3 | 1.3 | |

| | | | | | | | |
|---|---|---|---|---|---|---|---|
| Each mean is based on 75 termites (5 replications/treatment) ² Test initiated 28 July 2005 ³ Example (0.125% of Compound P5a on superabsorber) ⁴ Dilutable concentrate of Compound P5a (11.0%) | | | | | | | |

## Claims

1. A pesticide composition in the form of a water absorbent granular material which contains
i) from 0.001 to 10% by weight of at least one organic pesticide compound,
ii) from 80 to 99.999% by weight of at least one granular superabsorbent polymer, and
iii) water,
wherein the % by weight is based on the total weight of the composition, except for water and wherein the components i) and ii) make up at least 90% by weight of the composition except for water, the water absorbent granular material being obtainable by a process which comprises the fluidized bed spray coating of superabsorbent polymer granules with a liquid aqueous composition containing the at least one organic pesticide compound,
wherein the superabsorbent polymer is a crosslinked copolymer of ethylenically unsaturated monomers M, wherein the monomers M comprising at least 90% by weight, based of the total weight of monomers M, of
a mixture of at least one monoethylenically unsaturated carboxylic acid CA or a salt thereof and at least one amide of a monoethylenically unsaturated acid AM, or of
a mixture of at least one monoethylenically unsaturated carboxylic acid CA and at least one alkali metal salt of a monoethylenically unsaturated carboxylic acid CA.

2. The composition as claimed in claim 1, wherein the monomers M comprise at least 90% by weight, based of the total weight of monomers M, of a mixture of acrylic acid, or an alkali metal salt thereof and acrylamide.

3. The composition as claimed in claim 1, wherein the monomers M comprise at least 90% by weight, based of the total weight of monomers M, of a mixture of acrylic acid and an alkali metal salt of acrylic acid.

4. The composition as claimed in any of the preceding claims, wherein the granules of the pesticide containing material have an average particle size ranging from 0.1 to 5 mm.

5. The composition as claimed in any of the preceding claims, wherein the at least one pesticide compound is selected from the group of
- growth regulators,
- nicotinoid insecticides,
- organo(thio)phosphates,
- carbamates,
- pyrethroids,
- GABA antagonist compounds,
- macrocyclic lactone insecticides,
- mitochondrial complex I electron transport inhibitors,
- mitochondrial complex III electron transport inhibitors,
- uncoupler compounds,
- oxidative phosphorylation inhibitor compounds,
- moulting disruptor compounds,
- mixed function oxidase inhibitor compounds (synergists),
- sodium channel blocker compounds,
- selective feeding blockers,
- mitegrowth inhibitors,
- chitin synthesis inhibitors,
- lipid bisynthesis inhibitors,
- octapaminergic agonists,
- ryanodine receptor modulators,
- compounds of the formula P5 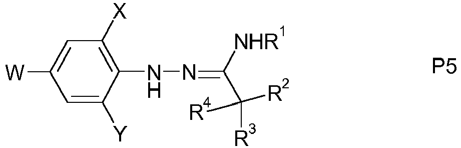
wherein X and Y are each independently halogen,
W is halogen or C₁-C₂-haloalkyl,
R¹ is C₁-C₆-alkyl, C₂-C₆-alkenyl, C₂-C₆-alkynyl, C₁-C₄-alkoxy-C₁-C₄-alkyl or C₃-C₆-cycloalkyl each of which may be substituted with 1, 2, 3, 4 or 5 halogen atoms,
R² and R³ are C₁-C₆-alkyl or together with the adjacent carbon atom may form a C₃-C₆-cycloalkyl moiety which may carry 1, 2 or 3 halogen atoms and
R⁴ is hydrogen or C₁-C₆-alkyl;
and the agriculturally acceptable salts thereof,
- anthranilamide compounds of formula P6 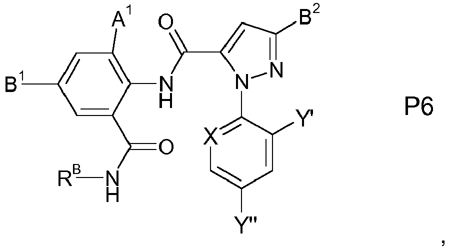 wherein A¹ is CH₃, CI, Br, I, X is C-H, C-CI, C-F or N, Y' is F, CI, or Br, Y" is H, F, Cl, or CF₃, B¹ is hydrogen, CI, Br, I, CN, B² is CI, Br, CF₃, OCH₂CF₃, OCF₂H, and R^{B} is hydrogen, CH₃ or CH(CH₃)₂;
and
aluminium phosphite, amidoflumet, benclothiaz, benzoximate, bifenazate, borax, bromopropylate, cyenopyrafen, cyflumetofen, chinomethionate, diclofol, fluoroacetate, pyridalyl, pyrifluquinazon, sulfur, tartar emetic and malodinitrile compounds.

6. A process for making a water absorbent granular material as claimed in any of the preceding claims, which comprises fluidized bed spray coating of a liquid aqueous composition containing the at least one pesticide compound onto superabsorbent polymer granules,
wherein the superabsorbent polymer is a crosslinked copolymer of ethylenically unsaturated monomers M, wherein the monomers M comprising at least 90% by weight, based of the total weight of monomers M, of a mixture of at least one monoethylenically unsaturated carboxylic acid CA or a salt thereof and at least one amide of a monoethylenically unsaturated acid AM, or of
a mixture of at least one monoethylenically unsaturated carboxylic acid CA and at least one alkali metal salt of a monoethylenically unsaturated carboxylic acid CA.

7. The process as claimed in claim 6, wherein the concentration of the at least one pesticide compound in the liquid aqueous composition is from 0.001 to 20% by weight, based on the total weight of the composition.

8. The process as claimed in any of claims 6 to 7, wherein the liquid aqueous composition of the at least one pesticide compound contains a neutralizing agent.

9. The process as claimed in any of claims 6 to 8, wherein the liquid aqueous composition of the at least one pesticide compound contains at least one surfactant.

10. The non-therapeutic use of a composition as claimed in any of claims 1 to 5 for combating arthropod pests, snails and nematodes, in particular soil living arthropod pests.

11. A non-therapeutic method for combating pests, selected from arthropods, snails and nematodes, which comprises contacting said pests, their habitat, breeding ground, food supply, plant, seed, soil, area, material or environment in which the pests are growing or may grow, or the materials, plants, seeds, soils, surfaces or spaces to be protected from an attack of or infestation by said pest, with a pesticidally effective amount of at least one pesticide composition as claimed in any of claims 1 to 5.

12. A method for combating soil living arthropod pests, snails and nematodes, which comprises applying to the soil a pesticidally effective amount of at least one pesticide composition as claimed in any of claims 1 to 5.

13. The method as claimed in claim 12, wherein the soil living pest is an insect selected from the orders Isoptera, Lepidoptera, Coleoptera, Collembola, Diptera, Dermaptera, Hymenoptera, Orthoptera, and Isopoda.

14. The method as claimed in claims 12 or 13, wherein the pesticide composition is applied to a narrow site surrounding a building which is to be protected against attack or infestation of the soil-living pest.

15. The method as claimed in claims 11, 12 or 13, wherein the pesticide composition is applied in fields of crop which are to be protected against attack or infestation of the soil-living pests.

16. The method as claimed in claims 11, 12 or 13, wherein the pesticide composition is applied in together with seed.

## Patentansprüche

1. Pestizidzusammensetzung in Form eines wasserabsorbierenden granulären Materials, das
i) 0,001 bis 10 Gew.-% mindestens einer organischen Pestizidverbindung,
ii) 80 bis 99,999 Gew.-% mindestens eines granulären superabsorbierenden Polymers und
iii) Wasser, enthält,
wobei die Gew.-% auf das Gesamtgewicht der Zusammensetzung, mit Ausnahme von Wasser, bezogen sind und wobei die Komponenten i) und ii) mindestens 90 Gew.-% der Zusammensetzung, mit Ausnahme von Wasser, ausmachen, das wasserabsorbierende granuläre Material durch ein Verfahren erhältlich ist, das das Fließbettsprühbeschichten superabsorbierender Polymergranula mit einer flüssigen wässrigen Zusammensetzung umfasst, die die mindestens eine organische Pestizidverbindung enthält,
wobei das superabsorbierende Polymer ein vernetztes Copolymer ethylenisch ungesättigter Monomere M ist, wobei die Monomere M mindestens 90 Gew.-%, bezogen auf das Gesamtgewicht der Monomere M,
eines Gemisches mindestens einer monoethylenisch ungesättigten Carbonsäure CA oder eines Salzes davon und mindestens eines Amids einer monoethylenisch ungesättigten Säure AM, oder
eines Gemischs mindestens einer monoethylenisch ungesättigten Carbonsäure CA und mindestens eines Alkalimetallsalzes einer monoethylenisch ungesättigten Carbonsäure CA umfassen.

2. Zusammensetzung nach Anspruch 1, wobei die Monomere M mindestens 90 Gew.-%, bezogen auf das Gesamtgewicht der Monomere M, eines Gemischs von Acrylsäure oder eines Alkalmetallsalzes davon und Acrylamid umfassen.

3. Zusammensetzung nach Anspruch 1, wobei die Monomere M mindestens 90 Gew.-%, bezogen auf das Gesamtgewicht der Monomere M, eines Gemischs von Acrylsäure und eines Alkalmetallsalzes von Acrylsäure umfassen.

4. Zusammensetzung nach einem der vorhergehenden Ansprüche, wobei die Granula des pestizidhaltigen Materials eine durchschnittliche Teilchengröße im Bereich von 0,1 bis 5 mm aufweisen.

5. Zusammensetzung nach einem der vorhergehenden Ansprüche, wobei die mindestens eine Pestizidverbindung ausgewählt ist aus der Gruppe von
- Wachstumsregulatoren,
- Nikotinoidinsektiziden,
- Organo(thio)phosphaten,
- Carbamaten,
- Pyrethroiden,
- GABA-Antagonistenverbindungen,
- makrocyclischen Lactoninsektiziden,
- mitochondrialen Komplex-I-Elektronentransportinhibitoren,
- mitochondrialen Komplex-III-Elektronentransportinhibitoren,
- Entkopplerverbindungen,
- oxidativen Phosphorylierungsinhibitorverbindungen,
- Häutungs-Disruptorverbindungen,
- Mischfunktions-Oxidaseinhibitorverbindungen (Synergisten),
- Natriumkanalblockerverbindungen,
- selektiven Fressblockern,
- Milben-Wachstumsinhibitoren,
- Chitinsynthese-Inhibitoren,
- Lipid-Biosynthesehemmern,
- octapaminergen Agonisten,
- Ryanodin-Rezeptor-Modulatoren,
- Verbindungen der Formel P5 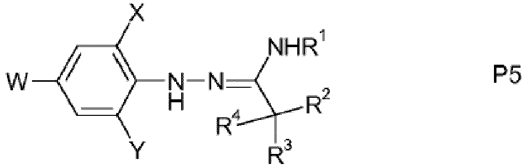
worin X und Y jeweils unabhängig voneinander Halogen sind,
W Halogen oder C₁-C₂-Halogenalkyl ist,
R¹ C₁-C₆-Alkyl, C₂-C₆-Alkenyl, C₂-C₆-Alkinyl, C₁-C₄-Alkoxy-C₁-C₄-alkyl oder C₃-C₆-Cycloalkyl ist, von denen jedes mit 1, 2, 3, 4 oder 5 Halogenatomen substituiert sein kann,
R² und R³ C₁-C₆-Alkyl sind oder zusammen mit dem benachbarten Kohlenstoffatom eine C₃-C₆-Cycloalkyleinheit bilden können, die 1, 2 oder 3 Halogenatome tragen kann und
R⁴ Wasserstoff oder C₁-C₆-Alkyl ist
und die landwirtschaftlich akzeptablen Salze davon,
- Anthranilamidverbindungen der Formel P6 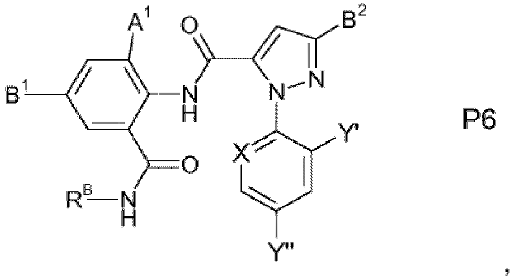 worin A¹ für CH₃, Cl, Br, I steht, X für C-H, C-Cl, C-F oder N steht, Y' für F, Cl oder Br steht, Y" für H, F, Cl oder CF₃ steht, B¹ für Wasserstoff, Cl, Br, I, CN steht, B² für Cl, Br, CF₃, OCH₂CF₃, OCF₂H steht, und R^{B} für Wasserstoff, CH₃ oder CH(CH₃)₂ steht;
und
Aluminiumphosphit, Amidoflumet, Benclothiaz, Benzoximat, Bifenazat, Borax, Brompropylat, Cyenopyrafen, Cyflumetofen, Chinomethionat, Diclofol, Fluoracetat, Pyridalyl, Pyrifluquinazon, Schwefel, Brechweinstein und Malodinitril-Verbindungen.

6. Verfahren zur Herstellung eines wasserabsorbierenden granulären Materials nach einem der vorhergehenden Ansprüche, umfassend das FließbettSprühbeschichten einer flüssigen wässrigen Zusammensetzung, die die mindestens eine Pestizidverbindung enthält, auf superabsorbierende Polymergranula,
wobei das superabsorbierende Polymer ein vernetztes Copolymer von ethylenisch ungesättigten Monomeren M ist, wobei die Monomere M mindestens 90 Gew.-%, bezogen auf das Gesamtgewicht der Monomere M,
eines Gemisches mindestens einer monoethylenisch ungesättigten Carbonsäure CA oder eines Salzes davon und mindestens eines Amids einer monoethylenisch ungesättigten Säure AM, oder
eines Gemischs mindestens einer monoethylenisch ungesättigten Carbonsäure CA und mindestens eines Alkalimetallsalzes einer monoethylenisch ungesättigten Carbonsäure CA umfassen.

7. Verfahren nach Anspruch 6, wobei die Konzentration der mindestens einen Pestizidverbindung in der flüssigen wässrigen Zusammensetzung 0,001 bis 20 Gew.-%, bezogen auf das Gesamtgewicht der Zusammensetzung, beträgt.

8. Verfahren nach einem der Ansprüche 6 bis 7, wobei die flüssige wässrige Zusammensetzung der mindestens einen Pestizidverbindung ein Neutralisationsmittel enthält.

9. Verfahren nach einem der Ansprüche 6 bis 8, wobei die flüssige wässrige Zusammensetzung der mindestens einen Pestizidverbindung mindestens ein oberflächenaktives Mittel enthält.

10. Nicht-therapeutische Verwendung einer Zusammensetzung nach einem der Ansprüche 1 bis 5 zur Bekämpfung von Arthropodenschädlingen, Schnecken und Nematoden, insbesondere bodenlebenden Arthropodenschädlingen.

11. Nicht-therapeutisches Verfahren zur Bekämpfung von Schädlingen, ausgewählt aus Arthropoden, Schnecken und Nematoden, umfassend das Inkontaktbringen der Schädlinge, ihres Habitats, Nährbodens, Nahrungsmittelangebots, Pflanzen, Saatgut, Bodens, Gebiets, Materials oder der Umwelt, in der die Schädlinge wachsen oder wachsen können, oder der Materialien, Pflanzen, Samen, Böden, Oberflächen oder Räume, die vor einem Angriff oder Befall durch den Schädling geschützt werden sollen, mit einer pestizid wirksamen Menge mindestens einer Pestizidzusammensetzung nach einem der Ansprüche 1 bis 5.

12. Verfahren zur Bekämpfung von im Boden lebenden Arthropodenschädlingen, Schnecken und Nematoden, umfassend das Ausbringen einer pestizid wirksamen Menge mindestens einer Pestizidzusammensetzung nach einem der Ansprüche 1 bis 5 auf den Boden.

13. Verfahren nach Anspruch 12, wobei der im Boden lebende Schädling ein Insekt ist, das aus den Ordnungen Isoptera, Lepidoptera, Coleoptera, Collembola, Diptera, Dermaptera, Hymenoptera, Orthoptera und Isopoda ausgewählt ist.

14. Verfahren nach Anspruch 12 oder 13, wobei die Pestizidzusammensetzung auf eine schmale Stelle ausgebracht wird, die ein Gebäude umgibt, das gegen Angriff oder Befall des im Boden lebenden Schädlings geschützt werden soll.

15. Verfahren nach den Ansprüchen 11, 12 oder 13, wobei die Pestizidzusammensetzung in Feldern von Kulturpflanzen ausgebracht wird, die gegen Angriff oder Befall der im Boden lebenden Schädlinge geschützt werden sollen.

16. Verfahren nach den Ansprüchen 11, 12 oder 13, wobei die Pestizidzusammensetzung zusammen mit Samen ausgebracht wird.

## Revendications

1. Composition pesticide sous la forme d'un matériau granulaire absorbant l'eau, qui contient
i) de 0,001 à 10% en poids d'au moins un composé pesticide organique,
ii) de 80 à 99,999% en poids d'au moins un polymère super-absorbant granulaire, et
iii) de l'eau,
où le % en poids est basé sur le poids total de la composition, à l'exception de l'eau et où les composants i) et ii) constituent au moins 90% en poids de la composition à l'exception de l'eau, le matériau granulaire absorbant l'eau pouvant être obtenu par un procédé qui comprend le revêtement par pulvérisation en lit fluidisé de granulés de polymère super-absorbant avec une composition aqueuse liquide contenant le au moins un composé pesticide organique,
où le polymère super-absorbant est un copolymère réticulé de monomères éthyléniquement insaturés M, les monomères M comprenant au moins 90% en poids, sur la base du poids total de monomères M,
d'un mélange d'au moins un acide carboxylique monoéthyléniquement insaturé CA ou un sel de celui-ci et d'au moins un amide d'un acide monoéthyléniquement insaturé AM, ou
d'un mélange d'au moins un acide carboxylique monoéthyléniquement insaturé CA et d'au moins un sel de métal alcalin d'un acide carboxylique monoéthyléniquement insaturé CA.

2. Composition selon la revendication 1, dans laquelle les monomères M comprennent au moins 90% en poids, sur la base du poids total de monomères M, d'un mélange d'acide acrylique, ou d'un sel de métal alcalin de celui-ci et d'acrylamide.

3. Composition selon la revendication 1, dans laquelle les monomères M comprennent au moins 90% en poids, sur la base du poids total de monomères M, d'un mélange d'acide acrylique, et d'un sel de métal alcalin d'acide acrylique.

4. Composition selon l'une quelconque des revendications précédentes, dans laquelle les granulés du matériau contenant un pesticide possèdent une taille de particules moyenne allant de 0,1 à 5 mm.

5. Composition selon l'une quelconque des revendications précédentes, dans laquelle le au moins un composé pesticide est choisi dans le groupe constitué par
- les substances de croissance,
- les insecticides à base de nicotinoïdes,
- les organo(thio)phosphates,
- les carbamates,
- les pyréthrinoïdes,
- les composés antagonistes du GABA,
- les insecticides à base de lactone macrocyclique,
- les inhibiteurs de la chaîne respiratoire mitochondriale du complexe I,
- les inhibiteurs de la chaîne respiratoire mitochondriale du complexe III,
- les composés de découplage,
- les composés d'inhibition de la phosphorylation oxydative,
- les composés perturbateurs de mue,
- les composés d'inhibition d'oxydase de fonction mixte (synergiques),
- les composés bloquant les canaux sodiques,
- les bloqueurs sélectifs de la prise de nourriture,
- les inhibiteurs de la croissance des acariens,
- les inhibiteurs de la synthèse de chitine,
- les inhibiteurs de la synthèse des lipides,
- les agonistes octapaminergiques,
- les modulateurs du récepteur de ryanodine,
- les composés de formule P5 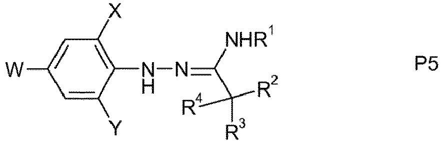
dans laquelle X et Y sont chacun indépendamment halogène, W est halogène ou C₁-C₂-halogénoalkyle,
R¹ est C₁-C₆-alkyle, C₂-C₆-alcényle, C₂-C₆-alcynyle, C₁-C₄-alcoxy-C₁-C₄-alkyle ou C₃-C₆-cycloalkyle, chacun d'entre eux pouvant être substitué par 1, 2, 3, 4 ou 5 atomes d'halogène,
R² et R³ sont C₁-C₆-alkyle ou, conjointement avec l'atome de carbone adjacent, peuvent former un motif C₃-C₆-cycloalkyle pouvant porter 1, 2 ou 3 atomes d'halogène, et
R⁴ est hydrogène ou C₁-C₆-alkyle ;
et les sels de celui-ci acceptables sur le plan agricole,
- les composés à base d'anthranilamide de formule P6 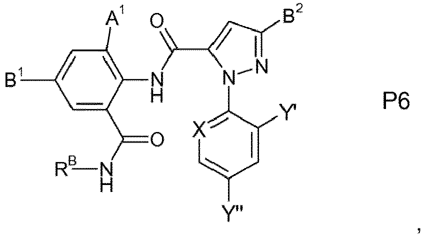 dans laquelle A¹ est CH₃, Cl, Br, I, X est C-H, C-Cl, C-F ou N, Y' est F, Cl ou Br, Y'' est H, F, Cl ou CF₃, B¹ est hydrogène, Cl, Br, I, CN, B² est Cl, Br, CF₃, OCH₂CF₃, OCF₂H, et R^{B} est hydrogène, CH₃ ou CH(CH₃)₂ ;
et
le phosphite d'aluminium, l'amidoflumet, le benclothiaz, le benzoximate, le bifénazate, le borax, le bromopropylate, le cyénopyrafène, le cyflumétofène, le chinométhionate, le dicofol, le fluoroacétate, le pyridalyle, la pyrifluquinazone, le soufre, le tartre émétique et les composés à base de malodinitrile.

6. Procédé de préparation d'un matériau granulaire absorbant l'eau selon l'une quelconque des revendications précédentes, comprenant le revêtement par pulvérisation en lit fluidisé d'une composition aqueuse liquide contenant le au moins un composé pesticide sur des granulés de polymère super-absorbant,
où le polymère super-absorbant est un copolymère réticulé de monomères éthyléniquement insaturés M, les monomères M comprenant au moins 90% en poids, sur la base du poids total de monomères M,
d'un mélange d'au moins un acide carboxylique monoéthyléniquement insaturé CA ou un sel de celui-ci et d'au moins un amide d'un acide monoéthyléniquement insaturé AM, ou
d'un mélange d'au moins un acide carboxylique monoéthyléniquement insaturé CA et d'au moins un sel de métal alcalin d'un acide carboxylique monoéthyléniquement insaturé CA.

7. Procédé selon la revendication 6, dans lequel la concentration du au moins un composé pesticide dans la composition aqueuse liquide va de 0,001 à 20% en poids, sur la base du poids total de la composition.

8. Procédé selon l'une quelconque des revendications 6 à 7, dans lequel la composition aqueuse liquide du au moins un composé pesticide contient un agent neutralisant.

9. Procédé selon l'une quelconque des revendications 6 à 8, dans lequel la composition aqueuse liquide du au moins un composé pesticide contient au moins un agent tensioactif.

10. Utilisation non thérapeutique d'une composition selon l'une quelconque des revendications 1 à 5, pour lutter contre des arthropodes nuisibles, des escargots et des nématodes, en particulier des arthropodes nuisibles vivant dans le sol.

11. Méthode non thérapeutique pour lutter contre des nuisibles, choisis parmi les arthropodes, les escargots et les nématodes, comprenant la mise en contact desdits nuisibles, de leur habitat, leurs lieux de reproduction, leur source d'alimentation, une plante, une semence, un sol, une zone, un matériau ou un environnement dans lesquels les nuisibles se développent ou sont susceptibles de se développer, ou des matériaux, plantes, semences, sols, surfaces ou espaces devant être protégés contre une attaque ou une infestation par ledit nuisible, avec une quantité efficace sur le plan pesticide d'au moins une composition pesticide selon l'une quelconque des revendications 1 à 5.

12. Méthode de lutte contre des arthropodes nuisibles, des escargots et des nématodes vivant dans le sol, comprenant l'application au sol d'une quantité efficace sur le plan pesticide d'au moins une composition pesticide selon l'une quelconque des revendications 1 à 5.

13. Méthode selon la revendication 12, dans laquelle le nuisible vivant dans le sol est un insecte choisi parmi les ordres *Isoptera, Lepidoptera, Coleoptera, Collembola, Diptera, Dermaptera, Hymenoptera, Orthoptera,* et *Isopoda.*

14. Méthode selon les revendications 12 ou 13, dans laquelle la composition pesticide est appliquée à un site étroit entourant un bâtiment devant être protégé contre une attaque ou une infestation par le nuisible vivant dans le sol.

15. Méthode selon les revendications 11, 12 ou 13, dans laquelle la composition pesticide est appliquée dans des parcelles de cultures devant être protégées contre une attaque ou une infestation par les nuisibles vivant dans le sol.

16. Méthode selon les revendications 11, 12 ou 13, dans laquelle la composition pesticide est appliquée conjointement avec les semences.
